# EUROPEAN PATENT APPLICATION

(11) **EP 3 282 780 A1**
(43) Date of publication of application: **14.02.2018**
(21) Application number: 15890345.0
(22) Date of filing: 30.04.2015
(51) Int. Cl.: H04W 64/00

(54) **INTERACTION METHOD, DEVICE AND SYSTEM FOR POSITIONING PARAMETER**

(71) Applicant: Huawei Technologies Co., Ltd., Longgang District Shenzhen, Guangdong 518129 (CN)
(72) Inventor: LI, Hong, Shenzhen, Guangdong 518129 (CN); CUI, Jie, Shenzhen, Guangdong 518129 (CN); LI, Anjian, Shenzhen, Guangdong 518129 (CN); HAN, Jing, Shenzhen, Guangdong 518129 (CN)
(74) Representative: Thun, Clemens
(86) International application number: PCT/CN2015/078122
(87) International publication number: WO 2016/172965

(57) **Abstract**

The present invention provides a positioning parameter exchange method and system, and an apparatus. An SPC receives a UE positioning information query message sent by an SRC, where the UE positioning information query request message includes an identifier of UE and a positioning parameter; the SPC obtains positioning information of the UE; and the SPC sends a UE positioning information query response message to the SRC. Therefore, the SPC and the SRC exchanges a parameter required for positioning, so as to avoid triggering interactions between multiple nodes on a core network side, and reduce a positioning delay.

## Description

### TECHNICAL FIELD

The present invention relates to communications technologies, and in particular, to a positioning parameter exchange method and system, and an apparatus.

### BACKGROUND

With continuous development of mobile communications technologies, there is an increasing demand for positioning services. The positioning services are applied to diversified application scenarios, such as emergency positioning, crime location tracking, navigation, and traffic control. However, regardless of diversification of the application scenarios, a requirement in the industry for positioning is always expecting a reliable, effective, and fast method. In other words, an easy-to-implement and high-accuracy positioning technology is always a favorable hot topic.

According to a mobile station positioning algorithm of a Long Term Evolution (Long Term Evolution, LTE for short) system, a geometric location of a mobile terminal is usually estimated by detecting characteristic parameters of a radio wave propagation signal (field strength of the signal, a time difference of arrival of the propagation signal, an azimuth of arrival of the signal, and the like) between a mobile station and a base station, and then according to a related positioning algorithm. According to a Global Navigation Satellite System (Global Navigation Satellite System, GNSS for short) positioning method, a terminal needs to have a wireless receiver receiving a GNSS signal. A specific implementation of the GNSS includes Global Positioning System (Global Positioning System, GPS for short) positioning, Galileo (Galileo) positioning, and the like. Downlink positioning and exclusive chip ID (Exclusive Chip ID, ECID for short) positioning are network positioning types, where a location of a mobile station is estimated mainly by detecting a characteristic parameter of a radio resource in a mobile communications system and then according to a positioning algorithm. The downlink positioning and the exclusive chip ID positioning are hot topics of a current research. During Observed Time Difference Of Arrival (Observed Time Difference Of Arrival, OTDOA for short) positioning, a mobile station receives downlink positioning reference signals from multiple base stations, performs timing measurement, and reports time differences of arrival of the positioning reference signals (Positioning Reference Signal, PRS for short) of the base stations; and a geographic location of the mobile station is calculated on a network positioning server. During uplink-time difference of arrival (Uplink Time Difference of Arrival, UTDOA for short) positioning, timing measurement is performed according to uplink signals that are sent by a mobile station and that are received by multiple location measurement units (Location Measurement Unit, LMU for short) and/or base stations, times of arrival of the uplink signals are reported, and a geographic location of the mobile station is calculated on a positioning server.

However, a positioning parameter exchange procedure based on a current enhanced serving mobile location centre (Enhanced Serving Mobile Location Centre, E-SMLC for short) includes interactions between multiple devices in a core network, causing a relatively long delay in positioning measurement and positioning information exchange. This is unacceptable to some delay-sensitive positioning services. For example, when positioning information is used for network optimization, an overlong delay causes invalidation of an optimization algorithm, and even causes reduction in network performance.

### SUMMARY

The present invention provides a positioning parameter exchange method and system, and an apparatus, to reduce a positioning delay.

A first aspect of the present invention provides a single positioning controller SPC, including:
a receiving module, configured to receive a user equipment UE positioning information query message sent by a single access network controller SRC, where the user equipment positioning information query message includes an identifier of the UE and a positioning parameter;
a processing module, configured to obtain positioning information of the UE according to the identifier of the UE and the positioning parameter; and
a sending module, configured to send a UE positioning information query response message to the SRC.

With reference to the first aspect, in a first possible implementation, when the processing module successfully obtains the positioning information of the UE, the UE positioning information query response message includes the identifier of the UE and the positioning information of the UE.

With reference to the first aspect, in a second possible implementation, the positioning information includes at least one of the following:
location information of the UE;
movement speed information of the UE; or
movement track information of the UE.

With reference to the first aspect, in a third possible implementation, the movement speed information of the UE includes horizontal movement speed information of the UE and vertical movement speed information of the UE.

With reference to the first aspect, in a fourth possible implementation, when the processing module fails to obtain the positioning information of the UE, the UE positioning information query response message includes an indication for a failure in obtaining the positioning information, and a failure cause; and
the failure cause includes at least one of the following: the UE positioning information query message is not supported, or the UE positioning information query message is temporarily unavailable.

With reference to the first aspect, in a fifth possible implementation, the positioning parameter includes any one or a combination of the following:
a UE location query indication;
a positioning cause;
a positioning accuracy requirement;
a positioning response delay;
a positioning dimension; or
a UE movement speed query indication.

A second aspect of the present invention provides a single access network controller SRC, including:
a sending module, configured to send a user equipment UE positioning information query message to a single positioning controller SPC, where the UE positioning information query message includes an identifier of the UE and a positioning parameter;
a receiving module, configured to receive a UE positioning information query response message sent by the SPC; and
a processing module, configured to manage a radio resource according to positioning information of the UE when the UE positioning information query response message that is sent by the SPC and that is received by the receiving module includes the identifier of the UE and the positioning information of the UE.

With reference to the second aspect, in a first possible implementation, the positioning parameter includes at least one of the following:
a UE location query indication;
a positioning cause;
a positioning accuracy requirement;
a positioning response delay;
a positioning dimension; or
a UE movement speed query indication.

With reference to the second aspect, in a second possible implementation, the positioning information includes at least one of the following:
location information of the UE;
movement speed information of the UE; or
movement track information of the UE.

With reference to the second aspect, in a third possible implementation, the movement speed information of the UE includes horizontal movement speed information of the UE and vertical movement speed information of the UE.

With reference to the second aspect, in a fourth possible implementation, the processing module is specifically configured to:
schedule the radio resource between neighboring cells according to the location information of the UE, to perform anti-interference processing; or
predict a movement direction of the UE according to the movement track information of the UE, to obtain movement prediction information; and optimize a handover decision for the UE according to the movement prediction information.

With reference to the second aspect, in a fifth possible implementation, the UE positioning information query response message further includes an indication for a failure in obtaining the positioning information, and a failure cause; and
the failure cause includes at least one of the following:
the UE positioning information query message is not supported; or
the UE positioning information query message is temporarily unavailable.

A third aspect of the present invention provides a single positioning controller SPC, including:
a sending module, configured to send a positioning reference signal configuration information query message to a single access network controller SRC, where the positioning reference signal configuration information query message includes a base station identifier, a base station standard type, and positioning reference signal information; and
a receiving module, configured to receive a positioning reference signal configuration notification message sent by the SRC.

With reference to the third aspect, in a first possible implementation, when positioning configuration of the SRC succeeds, the positioning reference signal configuration notification message includes the base station identifier, the base station standard type, and positioning reference signal resource allocation information.

With reference to the third aspect, in a second possible implementation, when positioning configuration of the SRC fails, the positioning reference signal configuration notification message includes an indication for a failure in obtaining positioning reference signal configuration information, and a failure cause; and
the failure cause includes at least one of the following:
the positioning reference signal configuration information query message is not supported; or
the positioning reference signal configuration information query message is temporarily unavailable.

With reference to the third aspect, in a third possible implementation, the positioning reference signal information includes at least one of the following:
antenna configuration;
a transmission period; or
bandwidth information.

A fourth aspect of the present invention provides a single access network controller SRC, including:
a receiving module, configured to receive a positioning reference signal configuration information query message sent by a single positioning controller SPC, where the positioning reference signal configuration information query message includes a base station identifier, a base station standard type, and positioning reference signal information;
a processing module, configured to select corresponding positioning reference signal configuration information according to the base station identifier, the base station standard type, and the positioning reference signal information; and
a sending module, configured to send a positioning reference signal configuration notification message to the SPC.

With reference to the fourth aspect, in a first possible implementation, the positioning reference signal configuration notification message further includes the base station identifier, the base station standard type, and the positioning reference signal configuration information

With reference to the fourth aspect, in a second possible implementation, the positioning reference signal configuration notification message includes an indication for a failure in obtaining the positioning reference signal configuration information, and a failure cause; and
the failure cause includes at least one of the following:
the positioning reference signal configuration information query message is not supported; or
the positioning reference signal configuration information query message is temporarily unavailable.

With reference to the fourth aspect, in a third possible implementation, the positioning reference signal information includes any one or a combination of the following:
antenna configuration;
a transmission period; or
bandwidth information.

A fifth aspect of the present invention provides a single access network controller SPC, including:
a sending module, configured to send a positioning measurement request message to a single access network controller SRC, where the positioning measurement request message includes a base station identifier, a base station standard type, an identifier of user equipment, and measurement report indication information; and
a receiving module, configured to receive a positioning measurement report message sent by the SRC, where the positioning measurement report message includes the base station identifier, the base station standard type, the identifier of the user equipment, and a positioning measurement result.

With reference to the fifth aspect, in a first possible implementation, the measurement report indication information includes at least one of the following:
a measurement report type;
a measurement report period; or
a measurement quantity type.

With reference to the fifth aspect, in a second possible implementation, when the SRC fails to configure a positioning reference signal, the positioning measurement report message includes an indication for a failure in obtaining the measurement result, and a failure cause; and
the failure cause includes at least one of the following:
the positioning measurement request message is not supported; or
the positioning measurement request message is temporarily unavailable.

A sixth aspect of the present invention provides a single access network controller SRC, including:
a receiving module, configured to receive a positioning measurement request message sent by a single access network controller SPC, where the positioning measurement request message includes a base station identifier, a base station standard type, an identifier of user equipment, and measurement report indication information; and
a sending module, configured to send a positioning measurement report message, where the positioning measurement report message includes the base station identifier, the base station standard type, the identifier of the user equipment, and a positioning measurement result.

With reference to the sixth aspect, in a first possible implementation, the measurement report indication information includes at least one of the following:
a measurement report type;
a measurement report period; or
a measurement quantity type.

With reference to the sixth aspect, in a second possible implementation, the positioning measurement report message further includes an indication for a failure in obtaining the measurement result, and a failure cause; and the failure cause includes at least one of the following:
the positioning measurement request message is not supported; or
the positioning measurement request message is temporarily unavailable.

A seventh aspect of the present invention provides a local positioning database LPD, including:
a receiving module, configured to receive a user equipment positioning information query message sent by a single access network controller SRC, where the user equipment positioning information query message includes an identifier of user equipment UE and a positioning parameter; and
a sending module, configured to send a provide positioning information message to the SRC, where the provide positioning information message includes the identifier of the UE and positioning information.

With reference to the seventh aspect, in a first possible implementation, the positioning parameter includes at least one of the following:
a request indication for movement track information of the UE;
historical positioning information of the UE;
a request indication for a historical movement speed of the UE; or
a response time.

With reference to the seventh aspect, in a second possible implementation, the positioning information includes at least one of the following:
the movement track information of the UE;
location estimation information of the UE; or
movement speed estimation information of the UE.

With reference to the seventh aspect, in a third possible implementation, the positioning information includes a positioning failure cause, and the positioning failure cause is used to indicate that the LPD does not have a positioning capability or the positioning parameter is an invalid value.

An eighth aspect of the present invention provides a single access network controller SRC, including:
a sending module, configured to send a user equipment positioning information query message to a local positioning database LPD, where the user equipment positioning information query message includes an identifier of user equipment UE and a positioning parameter; and
a receiving module, configured to receive a provide positioning information message sent by the LPD, where the provide positioning information message includes the identifier of the UE and positioning information.

With reference to the eighth aspect, in a first possible implementation, the positioning parameter includes at least one of the following:
a request indication for movement track information of the UE;
historical positioning information of the UE;
a request indication for a historical movement speed of the UE; or
a response time.

With reference to the eighth aspect, in a second possible implementation, the positioning information includes at least one of the following:
the movement track information of the UE;
location estimation information of the UE; or
movement speed estimation information of the UE.

With reference to the eighth aspect, in a third possible implementation, the positioning information includes a positioning failure cause, and the positioning failure cause is used to indicate that the LPD does not have a positioning capability or the positioning parameter is an invalid value.

A ninth aspect of the present invention provides a single positioning controller SPC, including:
a receiver, configured to receive a user equipment UE positioning information query message sent by a single access network controller SRC, where the user equipment positioning information query message includes an identifier of the UE and a positioning parameter;
a processor, configured to obtain positioning information of the UE according to the identifier of the UE and the positioning parameter; and
a transmitter, configured to send a UE positioning information query response message to the SRC.

With reference to the ninth aspect, in a first possible implementation, when the processor successfully obtains the positioning information of the UE, the UE positioning information query response message includes the identifier of the UE and the positioning information of the UE.

With reference to the ninth aspect, in a second possible implementation, the positioning information includes at least one of the following:
location information of the UE;
movement speed information of the UE; or
movement track information of the UE.

With reference to the ninth aspect, in a third possible implementation, the movement speed information of the UE includes horizontal movement speed information of the UE and vertical movement speed information of the UE.

With reference to the ninth aspect, in a fourth possible implementation, when the processor fails to obtain the positioning information of the UE, the UE positioning information query response message includes an indication for a failure in obtaining the positioning information, and a failure cause; and
the failure cause includes at least one of the following:
the UE positioning information query message is not supported; or
the UE positioning information query message is temporarily unavailable.

With reference to the ninth aspect, in a fifth possible implementation, the positioning parameter includes any one or a combination of the following:
a UE location query indication;
a positioning cause;
a positioning accuracy requirement;
a positioning response delay;
a positioning dimension; or
a UE movement speed query indication.

A tenth aspect of the present invention provides a single access network controller SRC, including:
a transmitter, configured to send a user equipment UE positioning information query message to a single positioning controller SPC, where the UE positioning information query message includes an identifier of the UE and a positioning parameter;
a receiver, configured to receive a UE positioning information query response message sent by the SPC; and
a processor, configured to manage a radio resource according to positioning information of the UE when the UE positioning information query response message that is sent by the SPC and that is received by the receiving module includes the identifier of the UE and the positioning information of the UE.

With reference to the tenth aspect, in a first possible implementation, the positioning parameter includes at least one of the following:
a UE location query indication;
a positioning cause;
a positioning accuracy requirement;
a positioning response delay;
a positioning dimension; or
a UE movement speed query indication.

With reference to the tenth aspect, in a second possible implementation, the positioning information includes at least one of the following:
location information of the UE;
movement speed information of the UE; or
movement track information of the UE.

With reference to the tenth aspect, in a third possible implementation, the movement speed information of the UE includes horizontal movement speed information of the UE and vertical movement speed information of the UE.

With reference to the tenth aspect, in a fourth possible implementation, the processor is specifically configured to:
schedule the radio resource between neighboring cells according to the location information of the UE, to perform anti-interference processing; or
predict a movement direction of the UE according to the movement track information of the UE, to obtain movement prediction information; and optimize a handover decision for the UE according to the movement prediction information.

With reference to the tenth aspect, in a fifth possible implementation, the UE positioning information query response message further includes an indication for a failure in obtaining the positioning information, and a failure cause; and
the failure cause includes at least one of the following:
the UE positioning information query message is not supported; or
the UE positioning information query message is temporarily unavailable.

An eleventh aspect of the present invention provides a single positioning controller SPC, including:
a transmitter, configured to send a positioning reference signal configuration information query message to a single access network controller SRC, where the positioning reference signal configuration information query message includes a base station identifier, a base station standard type, and positioning reference signal information; and
a processor, configured to receive a positioning reference signal configuration notification message sent by the SRC.

With reference to the eleventh aspect, in a first possible implementation, when positioning configuration of the SRC succeeds, the positioning reference signal configuration notification message includes the base station identifier, the base station standard type, and positioning reference signal resource allocation information.

With reference to the eleventh aspect, in a second possible implementation, when positioning configuration of the SRC fails, the positioning reference signal configuration notification message includes an indication for a failure in obtaining positioning reference signal configuration information, and a failure cause; and
the failure cause includes at least one of the following:
the positioning reference signal configuration information query message is not supported; or
the positioning reference signal configuration information query message is temporarily unavailable.

With reference to the eleventh aspect, in a third possible implementation, the positioning reference signal information includes at least one of the following:
antenna configuration;
a transmission period; or
bandwidth information.

A twelfth aspect of the present invention provides a single access network controller SRC, including:
a receiver, configured to receive a positioning reference signal configuration information query message sent by a single positioning controller SPC, where the positioning reference signal configuration information query message includes a base station identifier, a base station standard type, and positioning reference signal information;
a processor, configured to select corresponding positioning reference signal configuration information according to the base station identifier, the base station standard type, and the positioning reference signal information; and
a transmitter, configured to send a positioning reference signal configuration notification message to the SPC.

With reference to the twelfth aspect, in a first possible implementation, the positioning reference signal configuration notification message further includes the base station identifier, the base station standard type, and the positioning reference signal configuration information.

With reference to the twelfth aspect, in a second possible implementation, the positioning reference signal configuration notification message includes an indication for a failure in obtaining the positioning reference signal configuration information, and a failure cause; and
the failure cause includes at least one of the following:
the positioning reference signal configuration information query message is not supported; or
the positioning reference signal configuration information query message is temporarily unavailable.

With reference to the twelfth aspect, in a third possible implementation, the positioning reference signal information includes any one or a combination of the following:
antenna configuration;
a transmission period; or
bandwidth information.

A thirteenth aspect of the present invention provides a single access network controller SPC, including:
a transmitter, configured to send a positioning measurement request message to a single access network controller SRC, where the positioning measurement request message includes a base station identifier, a base station standard type, an identifier of user equipment, and measurement report indication information; and
a receiver, configured to receive a positioning measurement report message sent by the SRC, where the positioning measurement report message includes the base station identifier, the base station standard type, the identifier of the user equipment, and a positioning measurement result.

With reference to the thirteenth aspect, in a first possible implementation, the measurement report indication information includes at least one of the following:
a measurement report type;
a measurement report period; or
a measurement quantity type.

With reference to the thirteenth aspect, in a second possible implementation, when the SRC fails to configure a positioning reference signal, the positioning measurement report message includes an indication for a failure in obtaining the measurement result, and a failure cause; and
the failure cause includes at least one of the following:
the positioning measurement request message is not supported; or
the positioning measurement request message is temporarily unavailable.

A fourteenth aspect of the present invention provides a single access network controller SRC, including:
a receiver, configured to receive a positioning measurement request message sent by a single access network controller SPC, where the positioning measurement request message includes a base station identifier, a base station standard type, an identifier of user equipment, and measurement report indication information; and
a transmitter, configured to send a positioning measurement report message, where the positioning measurement report message includes the base station identifier, the base station standard type, the identifier of the user equipment, and a positioning measurement result.

With reference to the fourteenth aspect, in a first possible implementation, the measurement report indication information includes at least one of the following:
a measurement report type;
a measurement report period; or
a measurement quantity type.

With reference to the fourteenth aspect, in a second possible implementation, the positioning measurement report message further includes an indication for a failure in obtaining the measurement result, and a failure cause; and
the failure cause includes at least one of the following:
the positioning measurement request message is not supported; or
the positioning measurement request message is temporarily unavailable.

A fifteenth aspect of the present invention provides a local positioning database LPD, including:
a receiver, configured to receive a user equipment positioning information query message sent by a single access network controller SRC, where the user equipment positioning information query message includes an identifier of user equipment UE and a positioning parameter; and
a transmitter, configured to send a provide positioning information message to the SRC, where the provide positioning information message includes the identifier of the UE and positioning information.

With reference to the fifteenth aspect, in a first possible implementation, the positioning parameter includes at least one of the following:
a request indication for movement track information of the UE;
historical positioning information of the UE;
a request indication for a historical movement speed of the UE; or
a response time.

With reference to the fifteenth aspect, in a second possible implementation, the positioning information includes at least one of the following:
the movement track information of the UE;
location estimation information of the UE; or
movement speed estimation information of the UE.

With reference to the fifteenth aspect, in a third possible implementation, the positioning information includes a positioning failure cause, and the positioning failure cause is used to indicate that the LPD does not have a positioning capability or the positioning parameter is an invalid value.

A sixteenth aspect of the present invention provides a single access network controller SRC, including:
a transmitter, configured to send a user equipment positioning information query message to a local positioning database LPD, where the user equipment positioning information query message includes an identifier of user equipment UE and a positioning parameter; and
a receiver, configured to receive a provide positioning information message sent by the LPD, where the provide positioning information message includes the identifier of the UE and positioning information.

With reference to the sixteenth aspect, in a first possible implementation, the positioning parameter includes at least one of the following:
a request indication for movement track information of the UE;
historical positioning information of the UE;
a request indication for a historical movement speed of the UE; or
a response time.

With reference to the sixteenth aspect, in a second possible implementation, the positioning information includes at least one of the following:
the movement track information of the UE;
location estimation information of the UE; or
movement speed estimation information of the UE.

With reference to the sixteenth aspect, in a third possible implementation, the positioning information includes a positioning failure cause, and the positioning failure cause is used to indicate that the LPD does not have a positioning capability or the positioning parameter is an invalid value.

A seventeenth aspect of the present invention provides a positioning parameter exchange system, including:
at least one single positioning controller SPC according to any one of the first aspect or the possible implementations of the first aspect, and at least one single access network controller SRC according to any one of the second aspect or the possible implementations of the second aspect.

An eighteenth aspect of the present invention provides a positioning parameter exchange system, including:
at least one single positioning controller SPC according to any one of the third aspect or the possible implementations of the third aspect, and at least one single access network controller SRC according to any one of the fourth aspect or the possible implementations of the fourth aspect.

A nineteenth aspect of the present invention provides a positioning parameter exchange system, including:
at least one single positioning controller SPC according to any one of the fifth aspect or the possible implementations of the fifth aspect, and at least one single access network controller SRC according to any one of the sixth aspect or the possible implementations of the sixth aspect.

A twentieth aspect of the present invention provides a positioning parameter exchange system, including:
at least one local positioning database LPD according to any one of the seventh aspect or the possible implementations of the seventh aspect, and at least one single access network controller SRC according to any one of the eighth aspect or the possible implementations of the eighth aspect.

A twenty-first aspect of the present invention provides a positioning parameter exchange method, including:
receiving, by a single positioning controller SPC, a user equipment UE positioning information query message sent by a single access network controller SRC, where the user equipment positioning information query message includes an identifier of the UE and a positioning parameter;
obtaining, by the SPC, positioning information of the UE according to the identifier of the UE and the positioning parameter; and
sending, by the SPC, a UE positioning information query response message to the SRC.

With reference to the twenty-first aspect, in a first possible implementation, the UE positioning information query response message includes the identifier of the UE and the positioning information of the UE.

With reference to the twenty-first aspect, in a second possible implementation, the positioning information includes at least one of the following:
location information of the UE;
movement speed information of the UE; or
movement track information of the UE.

With reference to the twenty-first aspect, in a third possible implementation, the movement speed information of the UE includes horizontal movement speed information of the UE and vertical movement speed information of the UE.

With reference to the twenty-first aspect, in a fourth possible implementation, the UE positioning information query response message includes an indication for a failure in obtaining the positioning information, and a failure cause; and
the failure cause includes at least one of the following:
the UE positioning information query message is not supported; or
the UE positioning information query message is temporarily unavailable.

With reference to the twenty-first aspect, in a fifth possible implementation, the positioning parameter includes any one or a combination of the following:
a UE location query indication;
a positioning cause;
a positioning accuracy requirement;
a positioning response delay;
a positioning dimension; or
a UE movement speed query indication.

A twenty-second aspect of the present invention provides a positioning parameter exchange method, including:
sending, by a single access network controller SRC, a user equipment UE positioning information query message to a single positioning controller SPC, where the UE positioning information query message includes an identifier of the UE and a positioning parameter;
receiving, by the SRC, a UE positioning information query response message sent by the SPC; and
managing, by the SRC, a radio resource according to positioning information of the UE when the UE positioning information query response message that is sent by the SPC and that is received by the SRC includes the identifier of the UE and the positioning information of the UE.

With reference to the twenty-second aspect, in a first possible implementation, the positioning parameter includes at least one of the following:
a UE location query indication;
a positioning cause;
a positioning accuracy requirement;
a positioning response delay;
a positioning dimension; or
a UE movement speed query indication.

With reference to the twenty-second aspect, in a second possible implementation, the positioning information includes at least one of the following:
location information of the UE;
movement speed information of the UE; or
movement track information of the UE.

With reference to the twenty-second aspect, in a third possible implementation, the movement speed information of the UE includes horizontal movement speed information of the UE and vertical movement speed information of the UE.

With reference to the twenty-second aspect, in a fourth possible implementation, the managing, by the SRC, a radio resource according to positioning information of the UE includes:
scheduling, by the SRC, the radio resource between neighboring cells according to the location information of the UE, to perform anti-interference processing; or
predicting, by the SRC, a movement direction of the UE according to the movement track information of the UE, to obtain movement prediction information; and optimizing a handover decision for the UE according to the movement prediction information.

With reference to the twenty-second aspect, in a fifth possible implementation, the UE positioning information query response message further includes an indication for a failure in obtaining the positioning information, and a failure cause; and
the failure cause includes at least one of the following:
the UE positioning information query message is not supported; or
the UE positioning information query message is temporarily unavailable.

A twenty-third aspect of the present invention provides a positioning parameter exchange method, including:
sending, by a single positioning controller SPC, a positioning reference signal configuration information query message to a single access network controller SRC, where the positioning reference signal configuration information query message includes a base station identifier, a base station standard type, and positioning reference signal information; and
receiving, by the SPC, a positioning reference signal configuration notification message sent by the SRC.

With reference to the twenty-third aspect, in a first possible implementation, when positioning configuration of the SRC succeeds, the positioning reference signal configuration notification message includes the base station identifier, the base station standard type, and positioning reference signal resource allocation information.

With reference to the twenty-third aspect, in a second possible implementation, the positioning reference signal configuration notification message includes an indication for a failure in obtaining positioning reference signal configuration information, and a failure cause; and
the failure cause includes at least one of the following:
the positioning reference signal configuration information query message is not supported; or
the positioning reference signal configuration information query message is temporarily unavailable.

With reference to the twenty-third aspect, in a third possible implementation, the positioning reference signal information includes at least one of the following:
antenna configuration;
a transmission period; or
bandwidth information.

A twenty-fourth aspect of the present invention provides a positioning parameter exchange method, including:
receiving, by a single access network controller SRC, a positioning reference signal configuration information query message sent by a single positioning controller SPC, where the positioning reference signal configuration information query message includes a base station identifier, a base station standard type, and positioning reference signal information;
selecting, by the SRC, corresponding positioning reference signal configuration information according to the base station identifier, the base station standard type, and the positioning reference signal information; and
sending, by the SRC, a positioning reference signal configuration notification message to the SPC.

With reference to the twenty-fourth aspect, in a first possible implementation, the positioning reference signal configuration notification message further includes the base station identifier, the base station standard type, and the positioning reference signal configuration information.

With reference to the twenty-fourth aspect, in a second possible implementation, the positioning reference signal configuration notification message includes an indication for a failure in obtaining the positioning reference signal configuration information, and a failure cause; and
the failure cause includes at least one of the following:
the positioning reference signal configuration information query message is not supported; or
the positioning reference signal configuration information query message is temporarily unavailable.

With reference to the twenty-fourth aspect, in a third possible implementation, the positioning reference signal information includes any one or a combination of the following:
antenna configuration;
a transmission period; or
bandwidth information.

A twenty-fifth aspect of the present invention provides a positioning parameter exchange method, including:
sending, by a single access network controller SPC, a positioning measurement request message to a single access network controller SRC, where the positioning measurement request message includes a base station identifier, a base station standard type, an identifier of user equipment, and measurement report indication information; and
receiving, by the SPC, a positioning measurement report message sent by the SRC, where the positioning measurement report message includes the base station identifier, the base station standard type, the identifier of the user equipment, and a positioning measurement result.

With reference to the twenty-fifth aspect, in a first possible implementation, the measurement report indication information includes at least one of the following:
a measurement report type;
a measurement report period; or
a measurement quantity type.

With reference to the twenty-fifth aspect, in a second possible implementation, the positioning measurement report message includes an indication for a failure in obtaining the measurement result, and a failure cause; and
the failure cause includes at least one of the following:
the positioning measurement request message is not supported; or
the positioning measurement request message is temporarily unavailable.

A twenty-sixth aspect of the present invention provides a positioning parameter exchange method, including:
receiving, by a single access network controller SRC, a positioning measurement request message sent by a single access network controller SPC, where the positioning measurement request message includes a base station identifier, a base station standard type, an identifier of user equipment, and measurement report indication information; and
sending, by the SRC, a positioning measurement report message to the SPC, where the positioning measurement report message includes the base station identifier, the base station standard type, the identifier of the user equipment, and a positioning measurement result.

With reference to the twenty-sixth aspect, in a first possible implementation, the measurement report indication information includes at least one of the following:
a measurement report type;
a measurement report period; or
a measurement quantity type.

With reference to the twenty-sixth aspect, in a second possible implementation, the positioning measurement report message includes an indication for a failure in obtaining the measurement result, and a failure cause; and
the failure cause includes at least one of the following:
the positioning measurement request message is not supported; or
the positioning measurement request message is temporarily unavailable.

A twenty-seventh aspect of the present invention provides a positioning parameter exchange method, including:
receiving, by a local positioning database LPD, a user equipment positioning information query message sent by a single access network controller SRC, where the user equipment positioning information query message includes an identifier of user equipment UE and a positioning parameter; and
sending, by the LPD, a provide positioning information message to the SRC, where the provide positioning information message includes the identifier of the UE and positioning information.

With reference to the twenty-seventh aspect, in a first possible implementation, the positioning parameter includes at least one of the following:
a request indication for movement track information of the UE;
historical positioning information of the UE;
a request indication for a historical movement speed of the UE; or
a response time.

With reference to the twenty-seventh aspect, in a second possible implementation, the positioning information includes at least one of the following:
the movement track information of the UE;
location estimation information of the UE; or
movement speed estimation information of the UE.

With reference to the twenty-seventh aspect, in a third possible implementation, the positioning information includes a positioning failure cause, and the positioning failure cause is used to indicate that the LPD does not have a positioning capability or the positioning parameter is an invalid value.

A twenty-eighth aspect of the present invention provides a positioning parameter exchange method, including:
sending, by a single access network controller SRC, a user equipment positioning information query message to a local positioning database LPD, where the user equipment positioning information query message includes an identifier of user equipment UE and a positioning parameter; and
receiving, by the SRC, a provide positioning information message sent by the LPD, where the provide positioning information message includes the identifier of the UE and positioning information.

With reference to the twenty-eighth aspect, in a first possible implementation, the positioning parameter includes at least one of the following:
a request indication for movement track information of the UE;
historical positioning information of the UE;
a request indication for a historical movement speed of the UE; or
a response time.

With reference to the twenty-eighth aspect, in a second possible implementation, the positioning information includes at least one of the following:
the movement track information of the UE;
location estimation information of the UE; or
movement speed estimation information of the UE.

With reference to the twenty-eighth aspect, in a third possible implementation, the positioning information includes a positioning failure cause, and the positioning failure cause is used to indicate that the LPD does not have a positioning capability or the positioning parameter is an invalid value.

According to the positioning parameter exchange method and system, and the apparatus that are provided in embodiments of the present invention, a single positioning controller SPC receives a user equipment UE positioning information query message sent by a single access network controller SRC, where the user equipment positioning information query request message includes an identifier of the UE and a positioning parameter; the SPC obtains positioning information of the UE according to the identifier of the UE and the positioning parameter; and the SPC sends a UE positioning information query response message to the SRC. Therefore, the SPC and the SRC that are on an access network side exchange a parameter required for positioning, so as to avoid interactions that are between multiple nodes on a core network side and that are triggered during positioning in the prior art, and reduce a positioning delay.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of a network architecture according to an embodiment of the present invention;
FIG. 2 is a schematic structural diagram of a single positioning controller SPC according to an embodiment of the present invention;
FIG. 3 is a schematic structural diagram of a single access network controller SRC according to an embodiment of the present invention;
FIG. 4 is a schematic structural diagram of another single positioning controller SPC according to an embodiment of the present invention;
FIG. 5 is a schematic structural diagram of another single access network controller SRC according to an embodiment of the present invention;
FIG. 6 is a schematic structural diagram of a local positioning database LPD according to an embodiment of the present invention;
FIG. 7 is a schematic structural diagram of a universal network device according to an embodiment of the present invention;
FIG. 8 is a schematic flowchart of a positioning parameter exchange method according to an embodiment of the present invention;
FIG. 9 is a schematic flowchart of another positioning parameter exchange method according to an embodiment of the present invention;
FIG. 10 is a schematic diagram of signaling interworking of a positioning parameter according to an embodiment of the present invention;
FIG. 11 is a schematic flowchart of another positioning parameter exchange method according to an embodiment of the present invention;
FIG. 12 is a schematic flowchart of another positioning parameter exchange method according to an embodiment of the present invention;
FIG. 13 is a schematic diagram of signaling interworking of another positioning parameter according to an embodiment of the present invention;
FIG. 14 is a schematic flowchart of another positioning parameter exchange method according to an embodiment of the present invention;
FIG. 15 is a schematic flowchart of another positioning parameter exchange method according to an embodiment of the present invention;
FIG. 16 is a schematic diagram of signaling interworking of another positioning parameter according to an embodiment of the present invention;
FIG. 17 is a schematic flowchart of another positioning parameter exchange method according to an embodiment of the present invention;
FIG. 18 is a schematic flowchart of another positioning parameter exchange method according to an embodiment of the present invention; and
FIG. 19 is a schematic diagram of signaling interworking of another positioning parameter according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In a prior-art network architecture, an E-SMLC is on a core network side, and a gateway mobile location center (Gateway Mobile Location Center, GMLC for short) is also a device on the core network side. The E-SMLC and the GMLC need to process various positioning requests; invoke a capability of a wireless network according to accuracy required by the requests, to obtain positioning information; and complete operation of a positioning service. For example, the E-SMLC and the GMLC implement functions such as subscriber data management, service data management, subscription information management, and authentication and charging on a value-added application. A basic positioning procedure is as follows:
Step 1: The GMLC receives a positioning request.
Step 2: The GMLC finds an MME to which a target terminal belongs.
Step 3: The GMLC sends, to the MME, the request for positioning the target terminal.
Step 4: The MME sends the positioning request to the E-SMLC.
Step 5: The E-SMLC performs a capability interaction with the terminal and performs measurement configuration, and the E-SMLC also interacts with a base station to obtain positioning signal configuration information on a base station side.
Step 6: The E-SMLC obtains positioning measurement results reported by the terminal (and the base station), and performs positioning calculation to obtain a location of the terminal.
Step 7: The E-SMLC reports the location of the terminal back to the MME.
Step 8: The MME feeds the location of the terminal back to the SMLC.
Step 9: The SMLC feeds the location of the terminal back to a source terminal sending the positioning request.

However, the positioning procedure includes many interactions on a core network side, and therefore, a long delay is caused. In addition, the E-SMLC is incapable of configuring sending of a positioning reference signal. Therefore, it appears that the positioning process includes many interactions, and much signaling is used. Furthermore, in the procedure, only an interaction in single LTE is considered, but a positioning manner reported by a terminal in LTE after performing inter-RAT measurement is not considered.

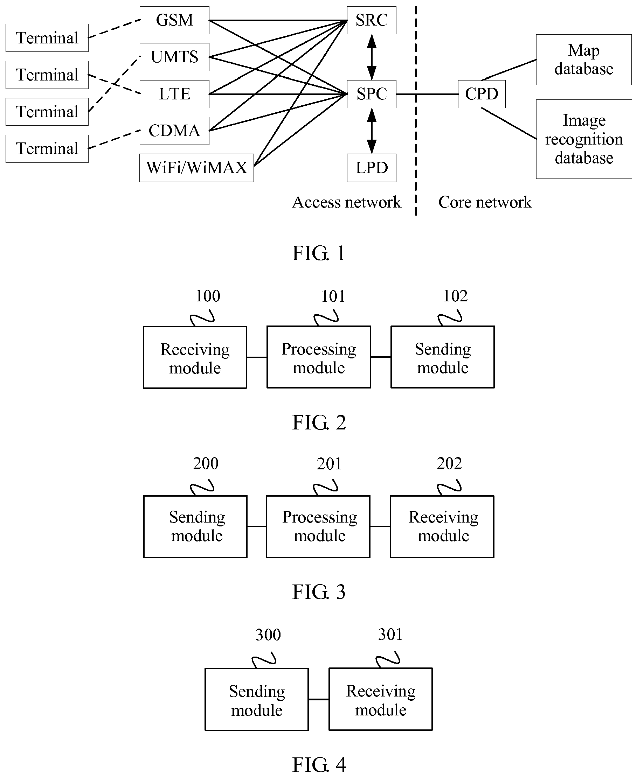

In the present invention, a new node and two databases are used based on a new network architecture. FIG. 1 is a schematic diagram of a network architecture according to an embodiment of the present invention. Referring to FIG. 1, (1) the new node is a single positioning controller (Single positioning controller, SPC for short), and the two databases are (2) a local positioning database (Local Positioning Database, LPD for short) and (3) a cloud positioning database (Cloud Positioning Database, CPD for short).

The SPC has the following functions:

In terms of positioning signal design and configuration, the SPC is compatible with multi-radio access type (Radio Access Type, RAT for short) positioning reference signal configuration, such as positioning reference signal (positioning reference signal, PRS for short) configuration, and CSI-RS (Channel-State Information reference signal) configuration.

In terms of positioning measurement configuration and resource allocation, positioning measurement configuration may be performed according to a positioning requirement, and a network resource is configured for positioning measurement. For example, a physical resource such as a reference signal is configured for positioning measurement.

In terms of location calculation, positioning calculation is performed according to different positioning solutions. For example, a positioning result obtained according to a time of arrival is combined with a positioning result obtained according to a fingerprint matching algorithm, to finally obtain a final positioning result.

In terms of track prediction, the SPC maintains track estimation and storage of a currently-positioned terminal, and interacts with a positioning database to obtain corresponding information of a user behavior and habit.

In terms of multi-RAT multi-network hybrid positioning, the SPC is compatible with positioning solutions of multiple RATs in multiple standards such as a non-3GPP. The multiple RATs and multiple networks include, for example, LTE, a Universal Mobile Telecommunications System (Universal Mobile Telecommunications System, UMTS for short), Code Division Multiple Access (Code Division Multiple Access, CDMA for short) 2000, a Global System for Mobile Communications (Global System for Mobile Communications, GSM for short), Bluetooth, WiFi, and a ZigBee (ZigBee) protocol standard. The SPC supports the following positioning solutions: an Assisted Global Navigation Satellite System (A-GNSS, Assisted Global Navigation Satellite System), an Observed Time Difference Of Arrival (Observed Time Difference Of Arrival, OTDOA for short) positioning method, an uplink-time difference of arrival (Uplink Time Difference of Arrival, UTDOA for short) positioning method, an exclusive chip ID (Exclusive Chip ID, ECID for short), a neural-network adaptive positioning manner, beaconing (Beaconing) positioning, and the like.

In addition, when UE performs multi-RAT positioning-related measurement, the UE may report measurement results of the foregoing multiple standards to the SPC.

The LPD has the following function:

A short-time positioning database may be used by the SPC to perform positioning calculation. A positioning result is corrected according to a movement track, a GIS, and speed information. After obtaining a positioning result, the SPC may output the positioning result to maintain the short-time database.

The CPD has the following function:

A long-time positioning database may be used to collect statistics about a user behavior and habit, and a service hotspot, and analyze big data. In addition, the database is to be used as an egress of positioning information of the SPC.

It can be seen that, as a positioning unit, the SPC has a location calculation capability, there is a direct interface between the SPC and a single access network controller (Single RAN Controller, SRC for short), and there is also an interface between the SRC and the LPD.

As shown in FIG. 1, after the SPC is used, for a purpose of positioning, the SPC inevitably interacts with the SRC, and a new interface is derived. In the embodiments of the present invention, an interface and an interaction that are between the SPC and the SRC are provided, an interface and an interaction that are between the LPD and the SRC are provided, and interaction content and an interaction objective are described. These interfaces and interactions are used to reconstruct a current network architecture, so that the SPC can exchange positioning-related information with the foregoing devices such as the SRC, the LPD, and the UE. Therefore, by means of interaction, positioning accuracy is improved, a positioning delay is shortened, and resource utilization of positioning is reduced.

The following separately describes the foregoing devices such as the SPC, the SRC, and the LPD.

FIG. 2 is a schematic structural diagram of a single positioning controller SPC according to an embodiment of the present invention. Referring to FIG. 2, the SPC includes a receiving module 100, a processing module 101, and a sending module 102.

The receiving module 100 is configured to receive a user equipment UE positioning information query message sent by a single access network controller SRC, where the user equipment positioning information query message includes an identifier of the UE and a positioning parameter.

The processing module 101 is configured to obtain positioning information of the UE according to the identifier of the UE and the positioning parameter.

The sending module 102 is configured to send a UE positioning information query response message to the SRC.

According to the single positioning controller SPC provided in this embodiment of the present invention, a receiving module receives a user equipment UE positioning information query message sent by a single access network controller SRC, where the user equipment positioning information query request message includes an identifier of the UE and a positioning parameter; the processing module obtains positioning information of the UE according to the identifier of the UE and the positioning parameter; and the sending module sends a UE positioning information query response message to the SRC. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, when the processing module 101 successfully obtains the positioning information of the UE, the UE positioning information query response message includes the identifier of the UE and the positioning information of the UE.

Further, the positioning information includes at least one of the following:
location information of the UE;
movement speed information of the UE; or
movement track information of the UE.

Further, the movement speed information of the UE includes horizontal movement speed information of the UE and vertical movement speed information of the UE.

Preferably, the UE positioning information query response message further includes a second extension bit.

The second extension bit is used to carry a new information element.

Specifically, the new information element may include but is not limited to movement direction estimation information of the user equipment. An ID of a next cell to be entered by the UE may be estimated according to the information.

Optionally, when the processing module 101 fails to obtain the positioning information of the UE, the UE positioning information query response message includes an indication for a failure in obtaining the positioning information, and a failure cause.

The failure cause includes at least one of the following: an undefined failure cause, the UE positioning information query message is not supported, or the UE positioning information query message is temporarily unavailable.

Specifically, the UE positioning information query response message may include an undefined extension bit. The undefined extension bit may be used to carry some currently undefined causes of a failure in obtaining the positioning information. For example, because excessively great communication interference causes a relatively large error in obtaining the positioning information, positioning accuracy cannot be ensured, and consequently, the positioning information fails to be obtained.

Further, the positioning parameter includes any one or a combination of the following:
a UE location query indication;
a positioning cause;
a positioning accuracy requirement;
a positioning response delay;
a positioning dimension; or
a UE movement speed query indication.

Preferably, the UE positioning information query message further includes a first extension bit.

The first extension bit is used to carry a new information element.

Specifically, the new information element may include but is not limited to a request indication for the movement direction estimation information of the user equipment.

For example, if the request indication for the movement direction estimation information of the user equipment is added to the first extension bit, a specific value of the movement direction estimation information of the user equipment is correspondingly fed back in the second extension bit of the UE positioning information query response message.

Correspondingly, on an SRC side, FIG. 3 is a schematic structural diagram of a single access network controller SRC according to an embodiment of the present invention. Referring to FIG. 3, the SRC includes a sending module 200, a processing module 201, and a receiving module 202.

The sending module 200 is configured to send a user equipment UE positioning information query message to a single positioning controller SPC, where the UE positioning information query message includes an identifier of the UE and a positioning parameter.

The receiving module 202 is configured to receive a UE positioning information query response message sent by the SPC.

The processing module 201 is configured to manage a radio resource according to positioning information of the UE when the UE positioning information query response message that is sent by the SPC and that is received by the receiving module 202 includes the identifier of the UE and the positioning information of the UE.

According to the single access network controller SRC provided in this embodiment of the present invention, a sending module sends a user equipment UE positioning information query message to a single positioning controller SPC, where the UE positioning information query message includes an identifier of the UE and a positioning parameter; the receiving module receives a UE positioning information query response message sent by the SPC; and the receiving module manages a radio resource according to positioning information of the UE when the UE positioning information query response message that is sent by the SPC and that is received by the receiving module includes the identifier of the UE and the positioning information of the UE. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the UE positioning information query message further includes a first extension bit.

The first extension bit is used to carry a new information element.

The UE positioning information query response message further includes a second extension bit.

The second extension bit is used to carry a new information element.

The first extension bit and the second extension bit are described above. Details are not described herein again.

Optionally, the positioning parameter includes at least one of the following:
a UE location query indication;
a positioning cause;
a positioning accuracy requirement;
a positioning response delay;
a positioning dimension; or
a UE movement speed query indication.

Optionally, the positioning information includes at least one of the following:
location information of the UE;
movement speed information of the UE; or
movement track information of the UE.

Further, the movement speed information of the UE includes horizontal movement speed information of the UE and vertical movement speed information of the UE.

Optionally, the processing module 201 is specifically configured to:
schedule the radio resource between neighboring cells according to the location information of the UE, to perform anti-interference processing; or
predict a movement direction of the UE according to the movement track information of the UE, to obtain movement prediction information; and optimize a handover decision for the UE according to the movement prediction information.

Specifically, an optimization process may include but is not limited to the following process: some neighboring cells to which the UE is impossibly handed over are excluded according to a predicted track, and a neighboring cell that fits the predicted track is selected as a cell to be entered by the UE or as a target cell for handover.

Optionally, the UE positioning information query response message further includes an indication for a failure in obtaining the positioning information, and a failure cause.

The failure cause includes at least one of the following: an undefined failure cause, the UE positioning information query message is not supported, or the UE positioning information query message is temporarily unavailable.

The undefined failure cause is described above. Details are not described herein again.

FIG. 4 is a schematic structural diagram of another single positioning controller SPC according to an embodiment of the present invention. Referring to FIG. 4, the SPC includes a sending module 300 and a receiving module 301.

The sending module 300 is configured to send a positioning reference signal configuration information query message to a single access network controller SRC, where the positioning reference signal configuration information query message includes a base station identifier, a base station standard type, and positioning reference signal information.

The receiving module 301 is configured to receive a positioning reference signal configuration notification message sent by the SRC.

According to the single positioning controller SPC provided in this embodiment of the present invention, a sending module sends a positioning reference signal configuration information query message to a single access network controller SRC, where the positioning reference signal configuration information query message includes a base station identifier, a base station standard type, and positioning reference signal information; and the receiving module receives a positioning reference signal configuration notification message sent by the SRC. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, when positioning configuration of the SRC succeeds, the positioning reference signal configuration notification message includes the base station identifier, the base station standard type, and positioning reference signal resource allocation information.

Alternatively, when positioning configuration of the SRC fails, the positioning reference signal configuration notification message includes an indication for a failure in obtaining positioning reference signal configuration information, and a failure cause.

The failure cause includes at least one of the following: an undefined failure cause, the positioning reference signal configuration information query message is not supported, or the positioning reference signal configuration information query message is temporarily unavailable.

The undefined failure cause is described above. Details are not described herein again.

Optionally, the positioning reference signal information includes at least one of the following:
antenna configuration;
a transmission period; or
bandwidth information.

Optionally, the positioning reference signal configuration information query message further includes a first extension bit.

The first extension bit is used to carry a new information element.

The positioning reference signal configuration notification message further includes a second extension bit.

The second extension bit is used to carry a new information element.

The new information element may include but is not limited to transmission timing, a transmission frequency channel number, transmission bandwidth, a transmission sequence, and the like that are of an uplink/downlink reference signal.

Further, for the parameters, the first extension bit of the positioning reference signal configuration information query message includes request indications for the parameters, and the second extension bit of the positioning reference signal configuration notification message includes specific values of the parameters.

For example, if the first extension bit of the positioning reference signal configuration information query message includes a request indication for transmission timing of a downlink reference signal, the second extension bit of the positioning reference signal configuration notification message includes a specific value of the transmission timing of the downlink reference signal.

Correspondingly, on an SRC side, still referring to FIG. 3, the modules of the SRC have the following functions:

The receiving module 202 is configured to receive a positioning reference signal configuration information query message sent by a single positioning controller SPC, where the positioning reference signal configuration information query message includes a base station identifier, a base station standard type, and positioning reference signal information.

The processing module 201 is configured to select corresponding positioning reference signal configuration information according to the base station identifier, the base station standard type, and the positioning reference signal information.

Specifically, an operation, administration, and maintenance (Operation Administration Maintenance, OAM for short) device configures positioning reference signals for different base stations, and delivers corresponding positioning reference signal configuration information to the SRC. The SRC stores the positioning reference signal configuration information, and when receiving the positioning reference signal configuration information query message, the SRC selects, according to the base station identifier, the base station standard type, and the positioning reference signal information, the positioning reference signal configuration information corresponding to these pieces of information.

The sending module 200 is configured to send a positioning reference signal configuration notification message to the SPC.

According to the SRC provided in this embodiment of the present invention, a receiving module receives a positioning reference signal configuration information query message sent by a single positioning controller SPC, where the positioning reference signal configuration information query message includes a base station identifier, a base station standard type, and positioning reference signal information; the processing module selects corresponding positioning reference signal configuration information according to the base station identifier, the base station standard type, and the positioning reference signal information; and the sending module sends a positioning reference signal configuration notification message to the SPC. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the positioning reference signal configuration notification message further includes the base station identifier, the base station standard type, and the positioning reference signal configuration information.

Alternatively, the positioning reference signal configuration notification message includes an indication for a failure in obtaining the positioning reference signal configuration information, and a failure cause.

The failure cause includes at least one of the following:
an undefined failure cause;
the positioning reference signal configuration information query message is not supported; or
the positioning reference signal configuration information query message is temporarily unavailable.

The undefined failure cause is described above. Details are not described herein again.

Optionally, the positioning reference signal information includes any one or a combination of the following:
antenna configuration;
a transmission period; or
bandwidth information.

Optionally, the positioning reference signal configuration information query message further includes a first extension bit.

The first extension bit is used to carry a new information element.

The positioning reference signal configuration notification message further includes a second extension bit.

The second extension bit is used to carry a new information element.

The new information element is described above on an SPC side. Details are not described herein again.

Still referring to FIG. 4, the modules of the SPC further have the following possible implementations:

The sending module 300 is configured to send a positioning measurement request message to a single access network controller SRC, where the positioning measurement request message includes a base station identifier, a base station standard type, an identifier of user equipment, and measurement report indication information.

The receiving module 301 is configured to receive a positioning measurement report message sent by the SRC, where the positioning measurement report message includes the base station identifier, the base station standard type, the identifier of the user equipment, and a positioning measurement result.

According to the SPC provided in this embodiment of the present invention, a sending module sends a positioning measurement request message to a single access network controller SRC, where the positioning measurement request message includes a base station identifier, a base station standard type, and measurement report indication information; and the receiving module receives a positioning measurement report message sent by the SRC, where the positioning measurement report message includes the base station identifier, the base station standard type, and a measurement result. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the measurement report indication information includes at least one of the following:
a measurement report type;
a measurement report period; or
a measurement quantity type.

Optionally, when the SRC fails to configure a positioning reference signal, the positioning measurement report message includes an indication for a failure in obtaining the measurement result, and a failure cause.

The failure cause includes at least one of the following:
an undefined failure cause;
the positioning measurement request message is not supported; or
the positioning measurement request message is temporarily unavailable.

Optionally, the positioning measurement request message further includes a first extension bit.

The first extension bit is used to carry a new information element.

The positioning measurement report message further includes a second extension bit.

The second extension bit is used to carry a new information element.

The new information element may include but is not limited to:
(1). a measurement quantity on a base station side, such as angle of arrival (Angle-of-Arrival, AoA for short) measurement, and a receive-transmit (Rx-Tx) time difference on the base station side; or
(2). a measurement quantity on a terminal side, for example, an Rx-Tx time difference of a terminal, reference signal received power (Reference Signal Receiving Power, RSRP for short) of a serving cell, reference signal received power of a neighboring cell, reference signal received quality (ReferenceSignalReceivingQuality, RSRQ for short) of the serving cell, and reference signal received quality of the neighboring cell; or
(3). a combination of a measurement quantity of a terminal and a measurement quantity of a small cell: a timing advance type 1 and a timing advance type 2.

Specifically, a specific group of measurement quantities that is included in the new information element needs to be determined according to a selected specific positioning method.

Further, for the measurement quantities, the first extension bit of the positioning measurement request message includes request indications for the measurement quantities, and the second extension bit of the positioning measurement report message includes specific values of the measurement quantities.

For example, if the first extension bit of the positioning measurement request message includes a request indication for an AOA, the second extension bit of the positioning measurement report message includes a specific value of the AOA.

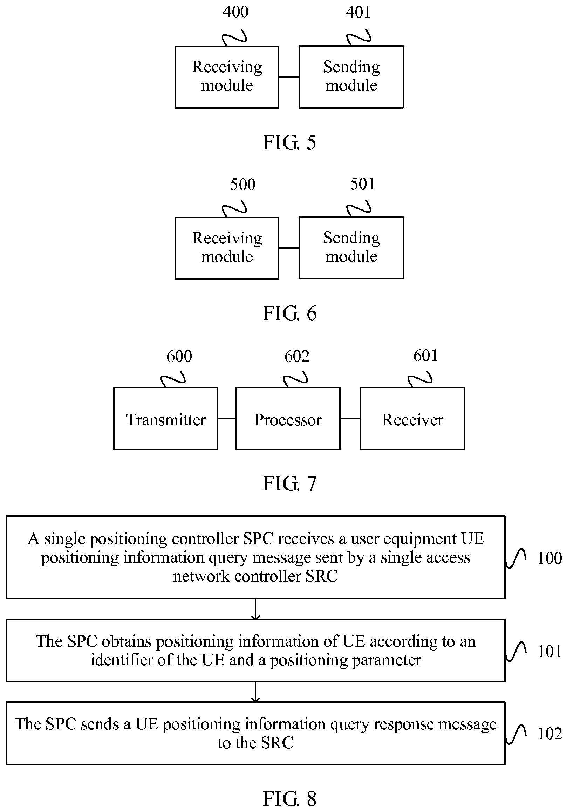

Correspondingly, on an SRC side, FIG. 5 is a schematic structural diagram of another single access network controller SRC according to an embodiment of the present invention. Referring to FIG. 5, the SRC includes a receiving module 400 and a sending module 401.

The receiving module 400 is configured to receive a positioning measurement request message sent by a single access network controller SPC, where the positioning measurement request message includes a base station identifier, a base station standard type, an identifier of user equipment, and measurement report indication information.

The sending module 401 is configured to send a positioning measurement report message, where the positioning measurement report message includes the base station identifier, the base station standard type, the identifier of the user equipment, and a positioning measurement result.

According to the SRC provided in this embodiment of the present invention, a receiving module receives a positioning measurement request message sent by a single access network controller SPC, where the positioning measurement request message includes a base station identifier, a base station standard type, and measurement report indication information; and the sending module sends a positioning measurement report message to the SPC, where the positioning measurement report message includes the base station identifier, the base station standard type, and a measurement result. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the measurement report indication information includes at least one of the following:
a measurement report type;
a measurement report period; or
a measurement quantity type.

Optionally, the positioning measurement report message further includes an indication for a failure in obtaining the measurement result, and a failure cause.

The failure cause includes at least one of the following:
an undefined failure cause;
the positioning measurement request message is not supported; or
the positioning measurement request message is temporarily unavailable.

Optionally, the positioning measurement request message further includes a first extension bit.

The first extension bit is used to carry a new information element.

The positioning measurement report message further includes a second extension bit.

The second extension bit is used to carry a new information element.

The first extension bit and the second extension bit are described above on an SPC side. Details are not described herein again.

FIG. 6 is a schematic structural diagram of a local positioning database LPD according to an embodiment of the present invention. Referring to FIG. 6, the LPD includes a receiving module 500 and a sending module 501.

The receiving module 500 is configured to receive a user equipment positioning information query message sent by a single access network controller SRC, where the user equipment positioning information query message includes an identifier of user equipment UE and a positioning parameter.

The sending module 501 is configured to send a provide positioning information message to the SRC, where the provide positioning information message includes the identifier of the UE and positioning information.

According to the local positioning database LPD provided in this embodiment of the present invention, a receiving module receives a user equipment positioning information query message sent by a single access network controller SRC, where the user equipment positioning information query message includes an identifier of user equipment UE and a positioning parameter; and the sending module sends a provide positioning information message to the SRC, where the provide positioning information message includes the identifier of the UE and positioning information. Therefore, the LPD and the SRC that are on an access network side exchange a parameter required for positioning, so as to avoid interactions that are between multiple nodes on a core network side and that are triggered during positioning in the prior art, and reduce a positioning delay.

Optionally, the positioning parameter includes at least one of the following:
a request indication for movement track information of the UE;
historical positioning information of the UE;
a request indication for a historical movement speed of the UE; or
a response time.

Optionally, the positioning information includes at least one of the following:
the movement track information of the UE;
location estimation information of the UE; or
movement speed estimation information of the UE.

Optionally, the positioning information includes a positioning failure cause, and the positioning failure cause is used to indicate that the LPD does not have a positioning capability or the positioning parameter is an invalid value.

Optionally, the user equipment positioning information query message further includes a first extension bit.

The first extension bit is used to carry a new information element.

The provide positioning information message further includes a second extension bit.

The second extension bit is used to carry a new information element.

The new information element may be movement direction estimation information of the user equipment. An ID of a next cell to be entered by the UE may be estimated according to the information.

Specifically, for the measurement quantity, the first extension bit of the user equipment positioning information query message includes a request indication for the measurement quantity, and the second extension bit of the provide positioning information message includes a specific value of the measurement quantity.

For example, if the first extension bit of the user equipment positioning information query message includes a request indication for the movement direction estimation information of the user equipment, the second extension bit of the provide positioning information message includes a specific value of the movement direction estimation information of the user equipment.

Correspondingly, on an SRC side, still referring to FIG. 5, the modules of the SRC further have the following functions:

The sending module 401 is configured to send a user equipment positioning information query message to a local positioning database LPD, where the user equipment positioning information query message includes an identifier of user equipment UE and a positioning parameter.

The receiving module 400 is configured to receive a provide positioning information message sent by the LPD, where the provide positioning information message includes the identifier of the UE and positioning information.

According to the SRC provided in this embodiment of the present invention, a sending module sends a user equipment positioning information query message to a local positioning database LPD, where the user equipment positioning information query message includes an identifier of user equipment UE and a positioning parameter; and the receiving module receives a provide positioning information message sent by the LPD, where the provide positioning information message includes the identifier of the UE and positioning information. Therefore, the LPD and the SRC that are on an access network side exchange a parameter required for positioning, so as to avoid interactions that are between multiple nodes on a core network side and that are triggered during positioning in the prior art, and reduce a positioning delay.

Optionally, the positioning parameter includes at least one of the following:
a request indication for movement track information of the UE;
historical positioning information of the UE;
a request indication for a historical movement speed of the UE; or
a response time.

Optionally, the positioning information includes at least one of the following:
the movement track information of the UE;
location estimation information of the UE; or
movement speed estimation information of the UE.

Optionally, the positioning information includes a positioning failure cause, and the positioning failure cause is used to indicate that the LPD does not have a positioning capability or the positioning parameter is an invalid value.

Optionally, the user equipment positioning information query message further includes a first extension bit.

The first extension bit is used to carry a new information element.

The provide positioning information message further includes a second extension bit.

The second extension bit is used to carry a new information element.

The first extension bit and the second extension bit are described above on an LPD side. Details are not described herein again.

FIG. 7 is a schematic structural diagram of a universal network device according to an embodiment of the present invention. Referring to FIG. 7, the universal network device includes a transmitter 600, a receiver 601, and a processor 602.

When the foregoing SPC is in a structure of the universal network device, the transmitter 600 of the universal network device may have a corresponding function of the sending module, the receiver 601 may have a corresponding function of the receiving module, and the processor 602 may have a corresponding function of the processing module.

When the foregoing SRC is in the structure of the universal network device, the transmitter 600 of the universal network device may have a corresponding function of the sending module, the receiver 601 may have a corresponding function of the receiving module, and the processor 602 may have a corresponding function of the processing module.

When the foregoing LPD is in the structure of the universal network device, the transmitter 600 of the universal network device may have a corresponding function of the sending module, the receiver 601 may have a corresponding function of the receiving module, and the processor 602 may have a corresponding function of the processing module.

FIG. 8 is a schematic flowchart of a positioning parameter exchange method according to an embodiment of the present invention. The method is performed by the SPC shown in FIG. 1, and the SPC may be in a structure shown in FIG. 2 or FIG. 7. Referring to FIG. 8, the method includes the following steps:

Step 100: The single positioning controller SPC receives a user equipment UE positioning information query message sent by a single access network controller SRC.

Specifically, the user equipment positioning information query message includes an identifier of the UE and a positioning parameter.

Step 101: The SPC obtains positioning information of the UE according to an identifier of the UE and the positioning parameter.

Step 102: The SPC sends a UE positioning information query response message to the SRC.

According to the positioning parameter exchange method provided in this embodiment of the present invention, a single positioning controller SPC receives a user equipment UE positioning information query message sent by a single access network controller SRC, where the user equipment positioning information request message includes an identifier of the UE and a positioning parameter; the SPC obtains positioning information of the UE according to the identifier of the UE and the positioning parameter; and the SPC sends a UE positioning information query response message to the SRC. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, for step 102, there are two possible scenarios. In Scenario 1, when the SPC successfully obtains the positioning information of the UE, the UE positioning information query response message includes the identifier of the UE and the positioning information of the UE.

In Scenario 2, when the SPC fails to obtain the positioning information of the UE, the UE positioning information query response message includes an indication for a failure in obtaining the positioning information, and a failure cause.

The failure cause includes at least one of the following:
an undefined failure cause;
the UE positioning information query message is not supported; or
the UE positioning information query message is temporarily unavailable.

Further, for Scenario 1, the positioning information includes at least one of the following:
location information of the UE;
movement speed information of the UE; or
movement track information of the UE.

Specifically, the movement speed information of the UE includes horizontal movement speed information of the UE and vertical movement speed information of the UE.

Further, the positioning parameter includes any one or a combination of the following:
a UE location query indication;
a positioning cause;
a positioning accuracy requirement;
a positioning response delay;
a positioning dimension; or
a UE movement speed query indication.

In addition, it should be noted that the UE positioning information query message and the UE positioning information query response message each may further carry other information. To implement such a function, the UE positioning information query response message further includes a second extension bit, and the second extension bit is used to carry a new information element; and the UE positioning information query message further includes a first extension bit, and the first extension bit is used to carry a new information element.

Specifically, the new information element is described above. Details are not described herein again.

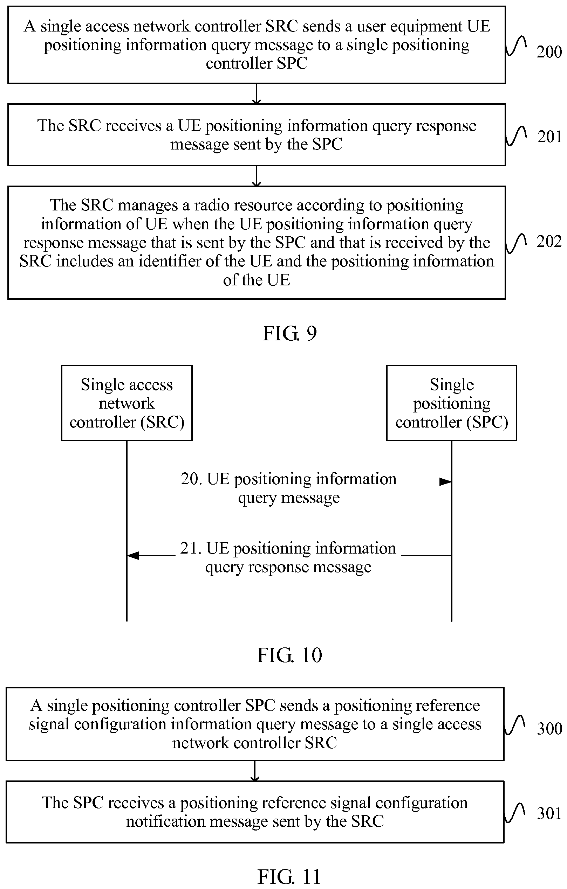

Correspondingly, on an SRC side, FIG. 9 is a schematic flowchart of another positioning parameter exchange method according to an embodiment of the present invention. The method is performed by an SRC, and the SRC may be in a structure shown in FIG. 3 or FIG. 7. Referring to FIG. 9, the method includes the following steps:
Step 200: The single access network controller SRC sends a user equipment UE positioning information query message to a single positioning controller SPC.

Specifically, the UE positioning information query message includes an identifier of the UE and a positioning parameter.

Step 201: The SRC receives a UE positioning information query response message sent by the SPC.

Step 202: The SRC manages a radio resource according to positioning information of the UE when the UE positioning information query response message that is sent by the SPC and that is received by the SRC includes an identifier of the UE and the positioning information of the UE.

According to the positioning parameter exchange method provided in this embodiment of the present invention, a single access network controller SRC sends a user equipment UE positioning information query message to a single positioning controller SPC, where the UE positioning information query message includes an identifier of the UE and a positioning parameter; the SRC receives a UE positioning information query response message sent by the SPC; and the SRC manages a radio resource according to positioning information of the UE when the UE positioning information query response message that is sent by the SPC and that is received by the SRC includes the identifier of the UE and the positioning information of the UE. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the positioning parameter includes at least one of the following:
a UE location query indication;
a positioning cause;
a positioning accuracy requirement;
a positioning response delay;
a positioning dimension; or
a UE movement speed query indication.

Optionally, the positioning information includes at least one of the following:
location information of the UE;
movement speed information of the UE; or
movement track information of the UE.

Further, a feasible implementation of step 203 is as follows:
Step 203a: The SRC schedules the radio resource between neighboring cells according to the location information of the UE, to perform anti-interference processing; and/or
step 203b: The SRC predicts a movement direction of the UE according to the movement track information of the UE, to obtain movement prediction information; and optimizes a handover decision for the UE according to the movement prediction information.

Specifically, an optimization process may include but is not limited to the following process: some neighboring cells to which the UE is impossibly handed over are excluded according to a predicted track, and a neighboring cell that fits the predicted track is selected as a cell to be entered by the UE or as a target cell for handover.

Optionally, the UE positioning information query response message that is sent by the SPC and that is received by the SRC further includes an indication for a failure in obtaining the positioning information, and a failure cause.

The failure cause includes at least one of the following:
an undefined failure cause;
the UE positioning information query message is not supported; or
the UE positioning information query message is temporarily unavailable.

In addition, it should be noted that the UE positioning information query message and the UE positioning information query response message each may further carry other information. To implement such a function, the UE positioning information query response message further includes a second extension bit, and the second extension bit is used to carry a new information element; and the UE positioning information query message further includes a first extension bit, and the first extension bit is used to carry a new information element.

Specifically, the new information element is described above. Details are not described herein again.

An exchange of user equipment positioning information that is performed between the SRC and the SPC is provided in the steps shown in FIG. 8 and FIG. 9. The interaction is described in the following by using a specific embodiment. FIG. 10 is a schematic diagram of signaling interworking of a positioning parameter according to an embodiment of the present invention. Referring to FIG. 10, the signaling interworking includes the following steps:

Step 20: An SRC sends a UE positioning information query message to an SPC, where the UE positioning information query message includes: (1) an identifier of UE; (2) a UE location query indication; (3) a positioning cause, such as an emergency call or a loss of a mobile phone; (4) a positioning accuracy requirement; (5) a positioning response delay; (6) a positioning dimension (2D/3D); (7) a UE movement speed query indication; and (8) other information.

After receiving the request message, the SPC selects a corresponding positioning method according to demodulated information (such as the positioning cause and the positioning accuracy requirement), to obtain information about the user equipment, such as location coordinates and a movement track.

Step 21: The SPC feeds a UE positioning information query response message back to the SRC, where the response message includes: (1) the identifier of the UE; (2) UE location information (2D/3D) corresponding to the positioning dimension required in the "UE positioning information query" message; (3) a UE movement speed that may be divided into a horizontal movement speed and a vertical movement speed; and (4) other information.

The other information may be set in a first extension bit of the UE positioning information query message and/or a second extension bit of the UE positioning information query response message.

If the SPC does not include any piece of positioning information of the user equipment, the UE positioning information query response message that is sent by the SPC to the SRC further includes an indication for a failure in obtaining the positioning information, and a failure cause.

It should be noted that similar to the foregoing "failure" message, the following "failure" message includes a failure cause.

After receiving the response message, the SRC manages and optimizes a radio resource according to demodulated positioning-related information. This includes but is not limited to the following operations:
(1). The SRC coordinates, based on the location information of the UE, resources scheduled for neighboring cells, to avoid inter-cell interference.
(2). The SRC predicts a movement direction of the UE based on track information of the UE, and optimizes a handover decision for the UE according to the prediction information.

FIG. 11 is a schematic flowchart of another positioning parameter exchange method according to an embodiment of the present invention. The method is performed by an SPC, and the SPC may be in a structure shown in FIG. 4 or FIG. 7. Referring to FIG. 11, the method includes the following steps:
Step 300: The single positioning controller SPC sends a positioning reference signal configuration information query message to a single access network controller SRC.

The positioning reference signal configuration information query message includes a base station identifier, a base station standard type, and positioning reference signal information.

Step 301: The SPC receives a positioning reference signal configuration notification message sent by the SRC.

According to the positioning parameter exchange method provided in this embodiment of the present invention, a single positioning controller SPC sends a positioning reference signal configuration information query message to a single access network controller SRC, where the positioning reference signal configuration information query message includes a base station identifier, a base station standard type, and positioning reference signal information; and the SPC receives a positioning reference signal configuration notification message sent by the SRC. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, for the positioning reference signal configuration notification message in step 301, there are at least two possible manners. In Manner 1, when positioning configuration of the SRC succeeds, the positioning reference signal configuration notification message includes the base station identifier, the base station standard type, and positioning reference signal resource allocation information.

In Manner 2, when positioning configuration of the SRC fails, the positioning reference signal configuration notification message includes an indication for a failure in obtaining positioning reference signal configuration information, and a failure cause.

The failure cause includes at least one of the following:
an undefined failure cause;
the positioning reference signal configuration information query message is not supported; or
the positioning reference signal configuration information query message is temporarily unavailable.

The positioning reference signal information includes at least one of the following:
antenna configuration;
a transmission period; or
bandwidth information.

In addition, it should be noted that the positioning reference signal configuration information query message and the positioning reference signal configuration notification message each may further carry other information. To implement such a function, the positioning reference signal configuration information query message further includes a first extension bit, and the first extension bit is used to carry a new information element; and the positioning reference signal configuration notification message further includes a second extension bit, and the second extension bit is used to carry a new information element.

Specifically, the new information element is described above. Details are not described herein again.

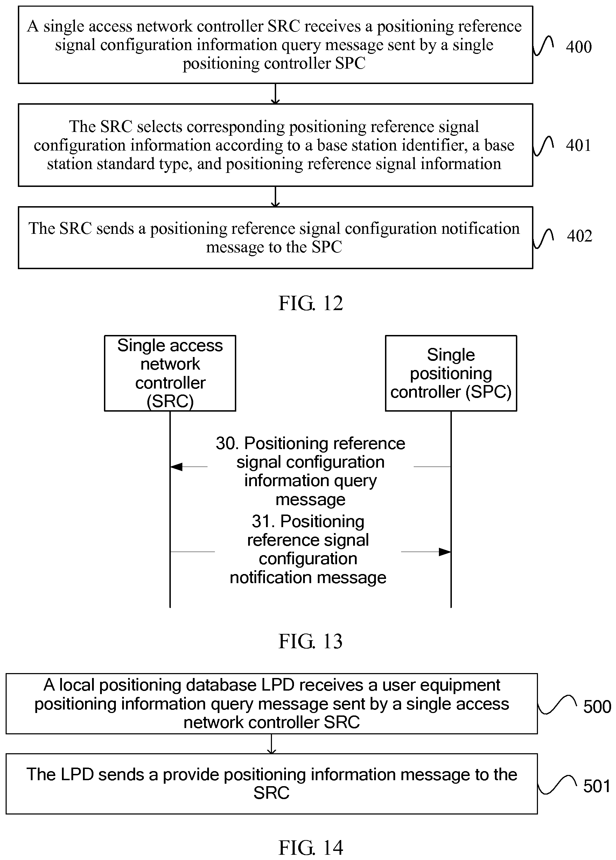

Correspondingly, on an SRC side, FIG. 12 is a schematic flowchart of another positioning parameter exchange method according to an embodiment of the present invention. The method is performed by an SRC, and the SRC may be in a structure shown in FIG. 3 or FIG. 7. Referring to FIG. 12, the method includes the following steps:
Step 400: The single access network controller SRC receives a positioning reference signal configuration information query message sent by a single positioning controller SPC.

Specifically, the positioning reference signal configuration information query message includes a base station identifier, a base station standard type, and positioning reference signal information.

Step 401: The SRC selects corresponding positioning reference signal configuration information according to the base station identifier, the base station standard type, and the positioning reference signal information.

Specifically, OAM configures positioning reference signals for different base stations, and delivers corresponding positioning reference signal configuration information to the SRC. The SRC stores the positioning reference signal configuration information, and when receiving the positioning reference signal configuration information query message, the SRC selects, according to the base station identifier, the base station standard type, and the positioning reference signal information, the positioning reference signal configuration information corresponding to these pieces of information.

Step 402: The SRC sends a positioning reference signal configuration notification message to the SPC.

According to the positioning parameter exchange method provided in this embodiment of the present invention, a single access network controller SRC receives a positioning reference signal configuration information query message sent by a single positioning controller SPC, where the positioning reference signal configuration information query message includes a base station identifier, a base station standard type, and positioning reference signal information; the SRC selects corresponding positioning reference signal configuration information according to the base station identifier, the base station standard type, and the positioning reference signal information; and the SRC sends a positioning reference signal configuration notification message to the SPC. Therefore, the SPC and the SRC that are on an access network side exchange a parameter required for positioning, so as to avoid interactions that are between multiple nodes on a core network side and that are triggered during positioning in the prior art, and reduce a positioning delay.

For the positioning reference signal configuration notification message in step 402, there are at least two possible manners. In Manner 1, when positioning configuration of the SRC succeeds, the positioning reference signal configuration notification message includes the base station identifier, the base station standard type, and the positioning reference signal configuration information.

In Manner 2, when positioning configuration of the SRC fails, the positioning reference signal configuration notification message includes an indication for a failure in obtaining the positioning reference signal configuration information, and a failure cause.

The failure cause includes at least one of the following:
an undefined failure cause;
the positioning reference signal configuration information query message is not supported; or
the positioning reference signal configuration information query message is temporarily unavailable.

Optionally, the positioning reference signal information includes any one or a combination of the following:
antenna configuration;
a transmission period; or
bandwidth information.

In addition, it should be noted that the positioning reference signal configuration information query message and the positioning reference signal configuration notification message each may further carry other information. To implement such a function, the positioning reference signal configuration information query message further includes a first extension bit, and the first extension bit is used to carry a new information element; and the positioning reference signal configuration notification message further includes a second extension bit, and the second extension bit is used to carry a new information element.

Specifically, the new information element is described above. Details are not described herein again.

An exchange of positioning configuration information that is performed between the SRC and the SPC is provided in the steps shown in FIG. 11 and FIG. 12. The interaction is described in the following by using a specific embodiment. FIG. 13 is a schematic diagram of signaling interworking of another positioning parameter according to an embodiment of the present invention. Referring to FIG. 13, the signaling interworking includes the following steps:
Step 30: An SPC sends a positioning reference signal configuration information query message to an SRC, where the request message includes: (1) a base station identifier; (2) a base station standard type (such as a GSM, a UMTS, or LTE); (3) positioning reference signal information (including a transmission period, bandwidth, and the like); and (4) other information.
Step 31: The SRC feeds a positioning reference signal configuration notification message back to the SPC, where the notification message includes: (1) the base station identifier; (2) the base station standard type (such as a GSM, a UMTS, or LTE); (3) positioning reference signal configuration information; and (4) other information.

If the SRC cannot configure a positioning reference signal, the positioning reference signal configuration notification message includes an indication for a failure in obtaining the positioning reference signal configuration information, and a failure cause.

The other information may be set in a first extension bit of the positioning reference signal configuration information query message and/or a second extension bit of the positioning reference signal configuration notification message.

FIG. 14 is a schematic flowchart of another positioning parameter exchange method according to an embodiment of the present invention. The method is performed by an LPD, and the LPD may be in a structure shown in FIG. 6 or FIG. 7. Referring to FIG. 14, the method includes the following steps:
Step 500: The local positioning database LPD receives a user equipment positioning information query message sent by a single access network controller SRC.

Specifically, the user equipment positioning information query message includes an identifier of user equipment UE and a positioning parameter.

Step 501: The LPD sends a provide positioning information message to the SRC.

Specifically, the provide positioning information message includes the identifier of the UE and positioning information.

According to the positioning parameter exchange method provided in this embodiment of the present invention, a local positioning database LPD receives a user equipment positioning information query message sent by a single access network controller SRC, where the user equipment positioning information query message includes an identifier of user equipment UE and a positioning parameter; and the LPD sends a provide positioning information message to the SRC, where the provide positioning information message includes the identifier of the UE and positioning information. Therefore, the LPD and the SRC that are on an access network side exchange a parameter required for positioning, so as to avoid interactions that are between multiple nodes on a core network side and that are triggered during positioning in the prior art, and reduce a positioning delay.

Optionally, the positioning parameter includes any one or a combination of the following:
a request indication for movement track information of the UE;
historical positioning information of the UE;
a request indication for a historical movement speed of the UE; or
a response time.

Optionally, the positioning information includes at least one of the following:
the movement track information of the UE;
location estimation information of the UE; or
movement speed estimation information of the UE.

Further, the positioning information includes a positioning failure cause, and the positioning failure cause is used to indicate that the LPD does not have a positioning capability or the positioning parameter is an invalid value.

In addition, it should be noted that the user equipment positioning information query message and the provide positioning information message each may further carry other information. To implement such a function, the user equipment positioning information query message further includes a first extension bit, and the first extension bit is used to carry a new information element; and the provide positioning information message further includes a second extension bit, and the second extension bit is used to carry a new information element.

Specifically, the new information element is described above. Details are not described herein again.

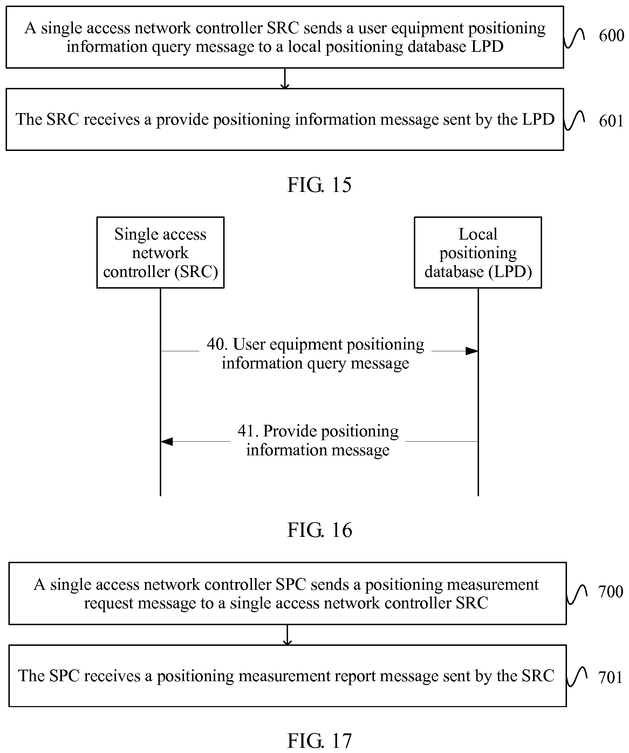

Correspondingly, on an SRC side, FIG. 15 is a schematic flowchart of another positioning parameter exchange method according to an embodiment of the present invention. The method is performed by an SRC, and the SRC may be in a structure shown in FIG. 5 or FIG. 7. Referring to FIG. 15, the method includes the following steps:
Step 600: The single access network controller SRC sends a user equipment positioning information query message to a local positioning database LPD.

Specifically, the user equipment positioning information query message includes an identifier of user equipment UE and a positioning parameter.

Step 601: The SRC receives a provide positioning information message sent by the LPD.

Specifically, the provide positioning information message includes the identifier of the UE and positioning information.

According to the positioning parameter exchange method provided in this embodiment of the present invention, a single access network controller SRC sends a user equipment positioning information query message to a local positioning database LPD, where the user equipment positioning information query message includes an identifier of user equipment UE and a positioning parameter; and the SRC receives a provide positioning information message sent by the LPD, where the provide positioning information message includes the identifier of the UE and positioning information. Therefore, the LPD and the SRC that are on an access network side exchange a parameter required for positioning, so as to avoid interactions that are between multiple nodes on a core network side and that are triggered during positioning in the prior art, and reduce a positioning delay.

Optionally, the positioning parameter includes at least one of the following:
a request indication for movement track information of the UE;
historical positioning information of the UE;
a request indication for a historical movement speed of the UE; or
a response time.

Optionally, the positioning information includes at least one of the following:
the movement track information of the UE;
location estimation information of the UE; or
movement speed estimation information of the UE.

Further, the positioning information includes a positioning failure cause, and the positioning failure cause is used to indicate that the LPD does not have a positioning capability or the positioning parameter is an invalid value.

In addition, it should be noted that the user equipment positioning information query message and the provide positioning information message each may further carry other information. To implement such a function, the user equipment positioning information query message further includes a first extension bit, and the first extension bit is used to carry a new information element; and the provide positioning information message further includes a second extension bit, and the second extension bit is used to carry a new information element.

Specifically, the new information element is described above. Details are not described herein again.

An exchange of a positioning information request that is performed between the LPD and the SRC is provided in the steps shown in FIG. 14 and FIG. 15. The interaction is described in the following by using a specific embodiment. FIG. 16 is a schematic diagram of signaling interworking of another positioning parameter according to an embodiment of the present invention. Referring to FIG. 16, the signaling interworking includes the following steps:
Step 40: An SRC sends a user equipment positioning information query message to an LPD, where the message includes: (1) an identifier of UE; (2) a request indication for track information of the UE; (3) historical positioning information (2D/3D) of the UE; (4) a request indication for a historical movement speed of the UE; (5) a response time; and (6) other information.
Step 41: The LPD feeds a provide positioning information (Provide Positioning Information) message back to the SRC, where the message includes: (1) the identifier of the UE; (2) the movement track information of the UE; (3) location estimation information of the UE; (4) movement speed estimation information of the UE; (5) a positioning failure cause (if the LPD is capable of providing required positioning information, this information element is an invalid value; or if the LPD is incapable of providing required positioning information, this information element indicates a reason why the LPD is incapable of providing the required positioning information); and (6) other information.

The other information may be set in a first extension bit of the user equipment positioning information query message and/or a second extension bit of the provide positioning information message.

FIG. 17 is a schematic flowchart of another positioning parameter exchange method according to an embodiment of the present invention. The method is performed by an SPC, and the SPC may be in a structure shown in FIG. 4 or FIG. 7. Referring to FIG. 17, the method includes the following steps:
Step 700: The single access network controller SPC sends a positioning measurement request message to a single access network controller SRC.

Specifically, the positioning measurement request message includes a base station identifier, a base station standard type, and measurement report indication information.

Step 701: The SPC receives a positioning measurement report message sent by the SRC.

Specifically, the positioning measurement report message includes the base station identifier, the base station standard type, and a measurement result.

According to the positioning parameter exchange method provided in this embodiment of the present invention, a single access network controller SPC sends a positioning measurement request message to a single access network controller SRC, where the positioning measurement request message includes a base station identifier, a base station standard type, and measurement report indication information; and the SPC receives a positioning measurement report message sent by the SRC, where the positioning measurement report message includes the base station identifier, the base station standard type, and a measurement result. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the measurement report indication information includes at least one of the following:
a measurement report type;
a measurement report period; or
a measurement quantity type.

Optionally, when the SRC fails to configure a positioning reference signal, the positioning measurement report message includes an indication for a failure in obtaining the measurement result, and a failure cause.

The failure cause includes at least one of the following:
an undefined failure cause;
the positioning measurement request message is not supported; or
the positioning measurement request message is temporarily unavailable.

In addition, it should be noted that the positioning measurement request message and the positioning measurement report message each may further carry other information. To implement such a function, the positioning measurement request message further includes a first extension bit, and the first extension bit is used to carry a new information element; and the positioning measurement report message further includes a second extension bit, and the second extension bit is used to carry a new information element.

Specifically, the new information element is described above. Details are not described herein again.

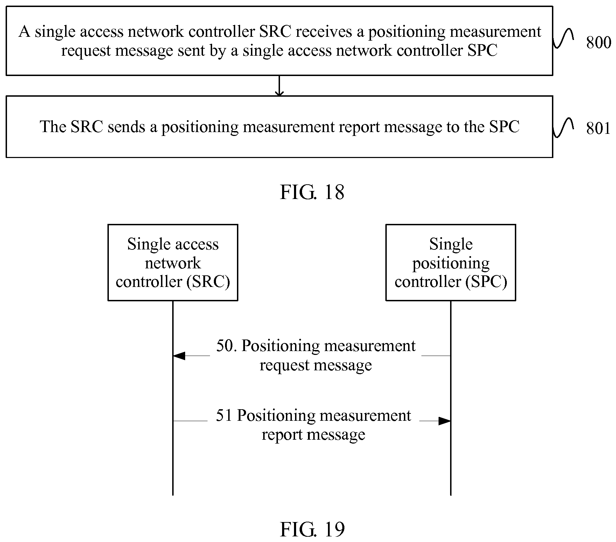

Correspondingly, on an SRC side, FIG. 18 is a schematic flowchart of another positioning parameter exchange method according to an embodiment of the present invention. The method is performed by an SRC, and the SRC may be in a structure shown in FIG. 5 or FIG. 7. Referring to FIG. 18, the method includes the following steps:

Step 800: The single access network controller SRC receives a positioning measurement request message sent by a single access network controller SPC, where the positioning measurement request message includes a base station identifier, a base station standard type, and measurement report indication information.

Step 801: The SRC sends a positioning measurement report message to the SPC, where the positioning measurement report message includes the base station identifier, the base station standard type, and a measurement result.

According to the positioning parameter exchange method provided in this embodiment of the present invention, a single access network controller SRC receives a positioning measurement request message sent by a single access network controller SPC, where the positioning measurement request message includes a base station identifier, a base station standard type, and measurement report indication information; and the SRC sends a positioning measurement report message to the SPC, where the positioning measurement report message includes the base station identifier, the base station standard type, and a measurement result. Therefore, the SPC and the SRC that are on an access network side exchange a parameter required for positioning, so as to avoid interactions that are between multiple nodes on a core network side and that are triggered during positioning in the prior art, and reduce a positioning delay.

Optionally, the measurement report indication information includes at least one of the following:
a measurement report type;
a measurement report period; or
a measurement quantity type.

Optionally, when the SRC fails to configure a positioning reference signal, the positioning measurement report message includes an indication for a failure in obtaining the measurement result, and a failure cause.

The failure cause includes at least one of the following:
an undefined failure cause;
the positioning measurement request message is not supported; or
the positioning measurement request message is temporarily unavailable.

The measurement report type, the measurement report period, and the measurement quantity type. In addition, it should be noted that the positioning measurement request message and the positioning measurement report message each may further carry other information. To implement such a function, the positioning measurement request message further includes a first extension bit, and the first extension bit is used to carry a new information element; and the positioning measurement report message further includes a second extension bit, and the second extension bit is used to carry a new information element.

An exchange of a positioning information request that is performed between the SPC and the SRC is provided in the steps shown in FIG. 17 and FIG. 18. The interaction is described in the following by using a specific embodiment. FIG. 19 is a schematic diagram of signaling interworking of another positioning parameter according to an embodiment of the present invention. Referring to FIG. 19, the signaling interworking includes the following steps:

Step 50: An SPC sends a positioning measurement request message to an SRC, where the request message includes: (1) a base station identifier; (2) a base station standard type (such as a GSM, a UMTS, LTE); (3) a measurement report type, such as a periodic measurement report, or a measurement report based on event trigger; (4) a measurement report period; (5) a measurement quantity type; and (6) other information.

Step 51: The SRC feeds a positioning measurement report message back to the SPC, where the request message includes: (1) the base station identifier; (2) the base station standard type (such as a GSM, a UMTS, LTE); (3) a measurement result; and (4) other information.

If the SRC cannot configure a positioning reference signal, the positioning measurement report message includes an indication for a failure in obtaining the measurement result, and a failure cause.

The other information may be set in a first extension bit of the positioning measurement request message and/or a second extension bit of the positioning measurement report message.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A single positioning controller SPC, comprising:
a receiving module, configured to receive a user equipment UE positioning information query message sent by a single access network controller SRC, wherein the user equipment positioning information query message comprises an identifier of the UE and a positioning parameter;
a processing module, configured to obtain positioning information of the UE according to the identifier of the UE and the positioning parameter; and
a sending module, configured to send a UE positioning information query response message to the SRC.

2. The SPC according to claim 1, wherein when the processing module successfully obtains the positioning information of the UE, the UE positioning information query response message comprises the identifier of the UE and the positioning information of the UE.

3. The SPC according to claim 2, wherein the positioning information comprises at least one of the following:
location information of the UE;
movement speed information of the UE; or
movement track information of the UE.

4. The SPC according to claim 3, wherein the movement speed information of the UE comprises horizontal movement speed information of the UE and vertical movement speed information of the UE.

5. The SPC according to claim 1, wherein when the processing module fails to obtain the positioning information of the UE, the UE positioning information query response message comprises an indication for a failure in obtaining the positioning information, and a failure cause; and
the failure cause comprises at least one of the following: the UE positioning information query message is not supported, or the UE positioning information query message is temporarily unavailable.

6. The SPC according to claim 5, wherein the positioning parameter comprises any one or a combination of the following:
a UE location query indication;
a positioning cause;
a positioning accuracy requirement;
a positioning response delay;
a positioning dimension; or
a UE movement speed query indication.

7. A single access network controller SRC, comprising:
a sending module, configured to send a user equipment UE positioning information query message to a single positioning controller SPC, wherein the UE positioning information query message comprises an identifier of the UE and a positioning parameter;
a receiving module, configured to receive a UE positioning information query response message sent by the SPC; and
a processing module, configured to manage a radio resource according to positioning information of the UE when the UE positioning information query response message that is sent by the SPC and that is received by the receiving module comprises the identifier of the UE and the positioning information of the UE.

8. The SRC according to claim 7, wherein the positioning parameter comprises at least one of the following:
a UE location query indication;
a positioning cause;
a positioning accuracy requirement;
a positioning response delay;
a positioning dimension; or
a UE movement speed query indication.

9. The SRC according to claim 7 or 8, wherein the positioning information comprises at least one of the following:
location information of the UE;
movement speed information of the UE; or
movement track information of the UE.

10. The SRC according to claim 9, wherein the movement speed information of the UE comprises horizontal movement speed information of the UE and vertical movement speed information of the UE.

11. The SRC according to claim 9 or 10, wherein the processing module is specifically configured to:
schedule the radio resource between neighboring cells according to the location information of the UE, to perform anti-interference processing; or
predict a movement direction of the UE according to the movement track information of the UE, to obtain movement prediction information; and optimize a handover decision for the UE according to the movement prediction information.

12. The SRC according to claim 7, wherein the UE positioning information query response message further comprises an indication for a failure in obtaining the positioning information, and a failure cause; and
the failure cause comprises at least one of the following:
the UE positioning information query message is not supported; or
the UE positioning information query message is temporarily unavailable.

13. A single positioning controller SPC, comprising:
a sending module, configured to send a positioning reference signal configuration information query message to a single access network controller SRC, wherein the positioning reference signal configuration information query message comprises a base station identifier, a base station standard type, and positioning reference signal information; and
a receiving module, configured to receive a positioning reference signal configuration notification message sent by the SRC.

14. The SPC according to claim 13, wherein when positioning configuration of the SRC succeeds, the positioning reference signal configuration notification message comprises the base station identifier, the base station standard type, and positioning reference signal resource allocation information.

15. The SPC according to claim 13, wherein when positioning configuration of the SRC fails, the positioning reference signal configuration notification message comprises an indication for a failure in obtaining positioning reference signal configuration information, and a failure cause; and
the failure cause comprises at least one of the following:
the positioning reference signal configuration information query message is not supported; or
the positioning reference signal configuration information query message is temporarily unavailable.

16. The SPC according to any one of claims 13 to 15, wherein the positioning reference signal information comprises at least one of the following:
antenna configuration;
a transmission period; or
bandwidth information.

17. A single access network controller SRC, comprising:
a receiving module, configured to receive a positioning reference signal configuration information query message sent by a single positioning controller SPC, wherein the positioning reference signal configuration information query message comprises a base station identifier, a base station standard type, and positioning reference signal information;
a processing module, configured to select corresponding positioning reference signal configuration information according to the base station identifier, the base station standard type, and the positioning reference signal information; and
a sending module, configured to send a positioning reference signal configuration notification message to the SPC.

18. The SRC according to claim 17, wherein the positioning reference signal configuration notification message further comprises the base station identifier, the base station standard type, and the positioning reference signal configuration information.

19. The SRC according to claim 17, wherein the positioning reference signal configuration notification message comprises an indication for a failure in obtaining the positioning reference signal configuration information, and a failure cause; and
the failure cause comprises at least one of the following:
the positioning reference signal configuration information query message is not supported; or
the positioning reference signal configuration information query message is temporarily unavailable.

20. The SRC according to any one of claims 17 to 19, wherein the positioning reference signal information comprises any one or a combination of the following:
antenna configuration;
a transmission period; or
bandwidth information.

21. A single access network controller SPC, comprising:
a sending module, configured to send a positioning measurement request message to a single access network controller SRC, wherein the positioning measurement request message comprises a base station identifier, a base station standard type, an identifier of user equipment, and measurement report indication information; and
a receiving module, configured to receive a positioning measurement report message sent by the SRC, wherein the positioning measurement report message comprises the base station identifier, the base station standard type, the identifier of the user equipment, and a positioning measurement result.

22. The SPC according to claim 21, wherein the measurement report indication information comprises at least one of the following:
a measurement report type;
a measurement report period; or
a measurement quantity type.

23. The SPC according to claim 21, wherein when the SRC fails to configure a positioning reference signal, the positioning measurement report message comprises an indication for a failure in obtaining the measurement result, and a failure cause; and
the failure cause comprises at least one of the following:
the positioning measurement request message is not supported; or
the positioning measurement request message is temporarily unavailable.

24. A single access network controller SRC, comprising:
a receiving module, configured to receive a positioning measurement request message sent by a single access network controller SPC, wherein the positioning measurement request message comprises a base station identifier, a base station standard type, an identifier of user equipment, and measurement report indication information; and
a sending module, configured to send a positioning measurement report message, wherein the positioning measurement report message comprises the base station identifier, the base station standard type, the identifier of the user equipment, and a positioning measurement result.

25. The SRC according to claim 24, wherein the measurement report indication information comprises at least one of the following:
a measurement report type;
a measurement report period; or
a measurement quantity type.

26. The SRC according to claim 25, wherein the positioning measurement report message further comprises an indication for a failure in obtaining the measurement result, and a failure cause; and
the failure cause comprises at least one of the following:
the positioning measurement request message is not supported; or
the positioning measurement request message is temporarily unavailable.

27. A local positioning database LPD, comprising:
a receiving module, configured to receive a user equipment positioning information query message sent by a single access network controller SRC, wherein the user equipment positioning information query message comprises an identifier of user equipment UE and a positioning parameter; and
a sending module, configured to send a provide positioning information message to the SRC, wherein the provide positioning information message comprises the identifier of the UE and positioning information.

28. The LPD according to claim 27, wherein the positioning parameter comprises at least one of the following:
a request indication for movement track information of the UE;
historical positioning information of the UE;
a request indication for a historical movement speed of the UE; or
a response time.

29. The LPD according to claim 27 or 28, wherein the positioning information comprises at least one of the following:
the movement track information of the UE;
location estimation information of the UE; or
movement speed estimation information of the UE.

30. The LPD according to any one of claims 27 to 29, wherein the positioning information comprises a positioning failure cause, and the positioning failure cause is used to indicate that the LPD does not have a positioning capability or the positioning parameter is an invalid value.

31. A single access network controller SRC, comprising:
a sending module, configured to send a user equipment positioning information query message to a local positioning database LPD, wherein the user equipment positioning information query message comprises an identifier of user equipment UE and a positioning parameter; and
a receiving module, configured to receive a provide positioning information message sent by the LPD, wherein the provide positioning information message comprises the identifier of the UE and positioning information.

32. The SRC according to claim 31, wherein the positioning parameter comprises at least one of the following:
a request indication for movement track information of the UE;
historical positioning information of the UE;
a request indication for a historical movement speed of the UE; or
a response time.

33. The SRC according to claim 31 or 32, wherein the positioning information comprises at least one of the following:
the movement track information of the UE;
location estimation information of the UE; or
movement speed estimation information of the UE.

34. The SRC according to claim 31 or 32, wherein the positioning information comprises a positioning failure cause, and the positioning failure cause is used to indicate that the LPD does not have a positioning capability or the positioning parameter is an invalid value.

35. A single positioning controller SPC, comprising:
a receiver, configured to receive a user equipment UE positioning information query message sent by a single access network controller SRC, wherein the user equipment positioning information query message comprises an identifier of the UE and a positioning parameter;
a processor, configured to obtain positioning information of the UE according to the identifier of the UE and the positioning parameter; and
a transmitter, configured to send a UE positioning information query response message to the SRC.

36. The SPC according to claim 35, wherein when the processor successfully obtains the positioning information of the UE, the UE positioning information query response message comprises the identifier of the UE and the positioning information of the UE.

37. The SPC according to claim 36, wherein the positioning information comprises at least one of the following:
location information of the UE;
movement speed information of the UE; or
movement track information of the UE.

38. The SPC according to claim 37, wherein the movement speed information of the UE comprises horizontal movement speed information of the UE and vertical movement speed information of the UE.

39. The SPC according to claim 35, wherein when the processor fails to obtain the positioning information of the UE, the UE positioning information query response message comprises an indication for a failure in obtaining the positioning information, and a failure cause; and
the failure cause comprises at least one of the following:
the UE positioning information query message is not supported; or
the UE positioning information query message is temporarily unavailable.

40. The SPC according to claim 39, wherein the positioning parameter comprises any one or a combination of the following:
a UE location query indication;
a positioning cause;
a positioning accuracy requirement;
a positioning response delay;
a positioning dimension; or
a UE movement speed query indication.

41. A single access network controller SRC, comprising:
a transmitter, configured to send a user equipment UE positioning information query message to a single positioning controller SPC, wherein the UE positioning information query message comprises an identifier of the UE and a positioning parameter;
a receiver, configured to receive a UE positioning information query response message sent by the SPC; and
a processor, configured to manage a radio resource according to positioning information of the UE when the UE positioning information query response message that is sent by the SPC and that is received by the receiving module comprises the identifier of the UE and the positioning information of the UE.

42. The SRC according to claim 41, wherein the positioning parameter comprises at least one of the following:
a UE location query indication;
a positioning cause;
a positioning accuracy requirement;
a positioning response delay;
a positioning dimension; or
a UE movement speed query indication.

43. The SRC according to claim 41 or 42, wherein the positioning information comprises at least one of the following:
location information of the UE;
movement speed information of the UE; or
movement track information of the UE.

44. The SRC according to claim 43, wherein the movement speed information of the UE comprises horizontal movement speed information of the UE and vertical movement speed information of the UE.

45. The SRC according to claim 43 or 44, wherein the processor is specifically configured to:
schedule the radio resource between neighboring cells according to the location information of the UE, to perform anti-interference processing; or
predict a movement direction of the UE according to the movement track information of the UE, to obtain movement prediction information; and optimize a handover decision for the UE according to the movement prediction information.

46. The SRC according to claim 41, wherein the UE positioning information query response message further comprises an indication for a failure in obtaining the positioning information, and a failure cause; and
the failure cause comprises at least one of the following:
the UE positioning information query message is not supported; or
the UE positioning information query message is temporarily unavailable.

47. A single positioning controller SPC, comprising:
a transmitter, configured to send a positioning reference signal configuration information query message to a single access network controller SRC, wherein the positioning reference signal configuration information query message comprises a base station identifier, a base station standard type, and positioning reference signal information; and
a processor, configured to receive a positioning reference signal configuration notification message sent by the SRC.

48. The SPC according to claim 47, wherein when positioning configuration of the SRC succeeds, the positioning reference signal configuration notification message comprises the base station identifier, the base station standard type, and positioning reference signal resource allocation information.

49. The SPC according to claim 47, wherein when positioning configuration of the SRC fails, the positioning reference signal configuration notification message comprises an indication for a failure in obtaining positioning reference signal configuration information, and a failure cause; and
the failure cause comprises at least one of the following:
the positioning reference signal configuration information query message is not supported; or
the positioning reference signal configuration information query message is temporarily unavailable.

50. The SPC according to any one of claims 47 to 59, wherein the positioning reference signal information comprises at least one of the following:
antenna configuration;
a transmission period; or
bandwidth information.

51. A single access network controller SRC, comprising:
a receiver, configured to receive a positioning reference signal configuration information query message sent by a single positioning controller SPC, wherein the positioning reference signal configuration information query message comprises a base station identifier, a base station standard type, and positioning reference signal information;
a processor, configured to select corresponding positioning reference signal configuration information according to the base station identifier, the base station standard type, and the positioning reference signal information; and
a transmitter, configured to send a positioning reference signal configuration notification message to the SPC.

52. The SRC according to claim 51, wherein the positioning reference signal configuration notification message further comprises the base station identifier, the base station standard type, and the positioning reference signal configuration information.

53. The SRC according to claim 51, wherein the positioning reference signal configuration notification message comprises an indication for a failure in obtaining the positioning reference signal configuration information, and a failure cause; and
the failure cause comprises at least one of the following:
the positioning reference signal configuration information query message is not supported; or
the positioning reference signal configuration information query message is temporarily unavailable.

54. The SRC according to any one of claims 51 to 53, wherein the positioning reference signal information comprises any one or a combination of the following:
antenna configuration;
a transmission period; or
bandwidth information.

55. A single access network controller SPC, comprising:
a transmitter, configured to send a positioning measurement request message to a single access network controller SRC, wherein the positioning measurement request message comprises a base station identifier, a base station standard type, an identifier of user equipment, and measurement report indication information; and
a receiver, configured to receive a positioning measurement report message sent by the SRC, wherein the positioning measurement report message comprises the base station identifier, the base station standard type, the identifier of the user equipment, and a positioning measurement result.

56. The SPC according to claim 55, wherein the measurement report indication information comprises at least one of the following:
a measurement report type;
a measurement report period; or
a measurement quantity type.

57. The SPC according to claim 55, wherein when the SRC fails to configure a positioning reference signal, the positioning measurement report message comprises an indication for a failure in obtaining the measurement result, and a failure cause; and
the failure cause comprises at least one of the following:
the positioning measurement request message is not supported; or
the positioning measurement request message is temporarily unavailable.

58. A single access network controller SRC, comprising:
a receiver, configured to receive a positioning measurement request message sent by a single access network controller SPC, wherein the positioning measurement request message comprises a base station identifier, a base station standard type, an identifier of user equipment, and measurement report indication information; and
a transmitter, configured to send a positioning measurement report message, wherein the positioning measurement report message comprises the base station identifier, the base station standard type, the identifier of the user equipment, and a positioning measurement result.

59. The SRC according to claim 58, wherein the measurement report indication information comprises at least one of the following:
a measurement report type;
a measurement report period; or
a measurement quantity type.

60. The SRC according to claim 59, wherein the positioning measurement report message further comprises an indication for a failure in obtaining the measurement result, and a failure cause; and
the failure cause comprises at least one of the following:
the positioning measurement request message is not supported; or
the positioning measurement request message is temporarily unavailable.

61. A local positioning database LPD, comprising:
a receiver, configured to receive a user equipment positioning information query message sent by a single access network controller SRC, wherein the user equipment positioning information query message comprises an identifier of user equipment UE and a positioning parameter; and
a transmitter, configured to send a provide positioning information message to the SRC, wherein the provide positioning information message comprises the identifier of the UE and positioning information.

62. The LPD according to claim 61, wherein the positioning parameter comprises at least one of the following:
a request indication for movement track information of the UE;
historical positioning information of the UE;
a request indication for a historical movement speed of the UE; or
a response time.

63. The LPD according to claim 61 or 62, wherein the positioning information comprises at least one of the following:
the movement track information of the UE;
location estimation information of the UE; or
movement speed estimation information of the UE.

64. The LPD according to any one of claims 61 to 63, wherein the positioning information comprises a positioning failure cause, and the positioning failure cause is used to indicate that the LPD does not have a positioning capability or the positioning parameter is an invalid value.

65. A single access network controller SRC, comprising:
a transmitter, configured to send a user equipment positioning information query message to a local positioning database LPD, wherein the user equipment positioning information query message comprises an identifier of user equipment UE and a positioning parameter; and
a receiver, configured to receive a provide positioning information message sent by the LPD, wherein the provide positioning information message comprises the identifier of the UE and positioning information.

66. The SRC according to claim 65, wherein the positioning parameter comprises at least one of the following:
a request indication for movement track information of the UE;
historical positioning information of the UE;
a request indication for a historical movement speed of the UE; or
a response time.

67. The SRC according to claim 65 or 66, wherein the positioning information comprises at least one of the following:
the movement track information of the UE;
location estimation information of the UE; or
movement speed estimation information of the UE.

68. The SRC according to claim 65 or 66, wherein the positioning information comprises a positioning failure cause, and the positioning failure cause is used to indicate that the LPD does not have a positioning capability or the positioning parameter is an invalid value.

69. A positioning parameter exchange system, comprising:
at least one single positioning controller SPC according to any one of claims 1 to 6, and at least one single access network controller SRC according to any one of claims 7 to 12.

70. A positioning parameter exchange system, comprising:
at least one single positioning controller SPC according to any one of claims 13 to 16, and at least one single access network controller SRC according to any one of claims 17 to 20.

71. A positioning parameter exchange system, comprising:
at least one single positioning controller SPC according to any one of claims 21 to 23, and at least one single access network controller SRC according to any one of claims 24 to 26.

72. A positioning parameter exchange system, comprising:
at least one local positioning database LPD according to any one of claims 27 to 30, and at least one single access network controller SRC according to any one of claims 31 to 34.

73. A positioning parameter exchange method, comprising:
receiving, by a single positioning controller SPC, a user equipment UE positioning information query message sent by a single access network controller SRC, wherein the user equipment positioning information query message comprises an identifier of the UE and a positioning parameter;
obtaining, by the SPC, positioning information of the UE according to the identifier of the UE and the positioning parameter; and
sending, by the SPC, a UE positioning information query response message to the SRC.

74. The method according to claim 73, wherein the UE positioning information query response message comprises the identifier of the UE and the positioning information of the UE.

75. The method according to claim 74, wherein the positioning information comprises at least one of the following:
location information of the UE;
movement speed information of the UE; or
movement track information of the UE.

76. The method according to claim 75, wherein the movement speed information of the UE comprises horizontal movement speed information of the UE and vertical movement speed information of the UE.

77. The method according to claim 73, wherein the UE positioning information query response message comprises an indication for a failure in obtaining the positioning information, and a failure cause; and
the failure cause comprises at least one of the following:
the UE positioning information query message is not supported; or
the UE positioning information query message is temporarily unavailable.

78. The method according to claim 77, wherein the positioning parameter comprises any one or a combination of the following:
a UE location query indication;
a positioning cause;
a positioning accuracy requirement;
a positioning response delay;
a positioning dimension; or
a UE movement speed query indication.

79. A positioning parameter exchange method, comprising:
sending, by a single access network controller SRC, a user equipment UE positioning information query message to a single positioning controller SPC, wherein the UE positioning information query message comprises an identifier of the UE and a positioning parameter;
receiving, by the SRC, a UE positioning information query response message sent by the SPC; and
managing, by the SRC, a radio resource according to positioning information of the UE when the UE positioning information query response message that is sent by the SPC and that is received by the SRC comprises the identifier of the UE and the positioning information of the UE.

80. The method according to claim 79, wherein the positioning parameter comprises at least one of the following:
a UE location query indication;
a positioning cause;
a positioning accuracy requirement;
a positioning response delay;
a positioning dimension; or
a UE movement speed query indication.

81. The method according to claim 79 or 80, wherein the positioning information comprises at least one of the following:
location information of the UE;
movement speed information of the UE; or
movement track information of the UE.

82. The method according to claim 81, wherein the movement speed information of the UE comprises horizontal movement speed information of the UE and vertical movement speed information of the UE.

83. The method according to claim 81 or 82, wherein the managing, by the SRC, a radio resource according to positioning information of the UE comprises:
scheduling, by the SRC, the radio resource between neighboring cells according to the location information of the UE, to perform anti-interference processing; or
predicting, by the SRC, a movement direction of the UE according to the movement track information of the UE, to obtain movement prediction information; and optimizing a handover decision for the UE according to the movement prediction information.

84. The method according to claim 79, wherein the UE positioning information query response message further comprises an indication for a failure in obtaining the positioning information, and a failure cause; and
the failure cause comprises at least one of the following:
the UE positioning information query message is not supported; or
the UE positioning information query message is temporarily unavailable.

85. A positioning parameter exchange method, comprising:
sending, by a single positioning controller SPC, a positioning reference signal configuration information query message to a single access network controller SRC, wherein the positioning reference signal configuration information query message comprises a base station identifier, a base station standard type, and positioning reference signal information; and
receiving, by the SPC, a positioning reference signal configuration notification message sent by the SRC.

86. The method according to claim 85, wherein when positioning configuration of the SRC succeeds, the positioning reference signal configuration notification message comprises the base station identifier, the base station standard type, and positioning reference signal resource allocation information.

87. The method according to claim 85, wherein the positioning reference signal configuration notification message comprises an indication for a failure in obtaining positioning reference signal configuration information, and a failure cause; and
the failure cause comprises at least one of the following:
the positioning reference signal configuration information query message is not supported; or
the positioning reference signal configuration information query message is temporarily unavailable.

88. The method according to any one of claims 85 to 87, wherein the positioning reference signal information comprises at least one of the following:
antenna configuration;
a transmission period; or
bandwidth information.

89. A positioning parameter exchange method, comprising:
receiving, by a single access network controller SRC, a positioning reference signal configuration information query message sent by a single positioning controller SPC, wherein the positioning reference signal configuration information query message comprises a base station identifier, a base station standard type, and positioning reference signal information;
selecting, by the SRC, corresponding positioning reference signal configuration information according to the base station identifier, the base station standard type, and the positioning reference signal information; and
sending, by the SRC, a positioning reference signal configuration notification message to the SPC.

90. The method according to claim 89, wherein the positioning reference signal configuration notification message further comprises the base station identifier, the base station standard type, and the positioning reference signal configuration information.

91. The method according to claim 89, wherein the positioning reference signal configuration notification message comprises an indication for a failure in obtaining the positioning reference signal configuration information, and a failure cause; and
the failure cause comprises at least one of the following:
the positioning reference signal configuration information query message is not supported; or
the positioning reference signal configuration information query message is temporarily unavailable.

92. The method according to any one of claims 89 to 91, wherein the positioning reference signal information comprises any one or a combination of the following:
antenna configuration;
a transmission period; or
bandwidth information.

93. A positioning parameter exchange method, comprising:
sending, by a single access network controller SPC, a positioning measurement request message to a single access network controller SRC, wherein the positioning measurement request message comprises a base station identifier, a base station standard type, an identifier of user equipment, and measurement report indication information; and
receiving, by the SPC, a positioning measurement report message sent by the SRC, wherein the positioning measurement report message comprises the base station identifier, the base station standard type, the identifier of the user equipment, and a positioning measurement result.

94. The method according to claim 93, wherein the measurement report indication information comprises at least one of the following:
a measurement report type;
a measurement report period; or
a measurement quantity type.

95. The method according to claim 93, wherein the positioning measurement report message comprises an indication for a failure in obtaining the measurement result, and a failure cause; and
the failure cause comprises at least one of the following:
the positioning measurement request message is not supported; or
the positioning measurement request message is temporarily unavailable.

96. A positioning parameter exchange method, comprising:
receiving, by a single access network controller SRC, a positioning measurement request message sent by a single access network controller SPC, wherein the positioning measurement request message comprises a base station identifier, a base station standard type, an identifier of user equipment, and measurement report indication information; and
sending, by the SRC, a positioning measurement report message to the SPC, wherein the positioning measurement report message comprises the base station identifier, the base station standard type, the identifier of the user equipment, and a positioning measurement result.

97. The method according to claim 96, wherein the measurement report indication information comprises at least one of the following:
a measurement report type;
a measurement report period; or
a measurement quantity type.

98. The method according to claim 97, wherein the positioning measurement report message comprises an indication for a failure in obtaining the measurement result, and a failure cause; and
the failure cause comprises at least one of the following:
the positioning measurement request message is not supported; or
the positioning measurement request message is temporarily unavailable.

99. A positioning parameter exchange method, comprising:
receiving, by a local positioning database LPD, a user equipment positioning information query message sent by a single access network controller SRC, wherein the user equipment positioning information query message comprises an identifier of user equipment UE and a positioning parameter; and
sending, by the LPD, a provide positioning information message to the SRC, wherein the provide positioning information message comprises the identifier of the UE and positioning information.

100. The method according to claim 99, wherein the positioning parameter comprises at least one of the following:
a request indication for movement track information of the UE;
historical positioning information of the UE;
a request indication for a historical movement speed of the UE; or
a response time.

101. The method according to claim 99 or 100, wherein the positioning information comprises at least one of the following:
the movement track information of the UE;
location estimation information of the UE; or
movement speed estimation information of the UE.

102. The method according to any one of claims 99 to 101, wherein the positioning information comprises a positioning failure cause, and the positioning failure cause is used to indicate that the LPD does not have a positioning capability or the positioning parameter is an invalid value.

103. A positioning parameter exchange method, comprising:
sending, by a single access network controller SRC, a user equipment positioning information query message to a local positioning database LPD, wherein the user equipment positioning information query message comprises an identifier of user equipment UE and a positioning parameter; and
receiving, by the SRC, a provide positioning information message sent by the LPD, wherein the provide positioning information message comprises the identifier of the UE and positioning information.

104. The method according to claim 103, wherein the positioning parameter comprises at least one of the following:
a request indication for movement track information of the UE;
historical positioning information of the UE;
a request indication for a historical movement speed of the UE; or
a response time.

105. The method according to claim 103 or 104, wherein the positioning information comprises at least one of the following:
the movement track information of the UE;
location estimation information of the UE; or
movement speed estimation information of the UE.

106. The method according to claim 103 or 104, wherein the positioning information comprises a positioning failure cause, and the positioning failure cause is used to indicate that the LPD does not have a positioning capability or the positioning parameter is an invalid value.
